# EUROPÄISCHE PATENTSCHRIFT

(11) **EP 3 954 591 B1**
(45) Veröffentlichungstag und Bekanntmachung des Hinweises auf die Patenterteilung: **03.01.2024**
(21) Anmeldenummer: 21186361.8
(22) Anmeldetag: 19.07.2021
(51) Int. Cl.: B60T 13/68, B60T 13/38, B60T 13/14, B60T 13/22

(54) **SEKUNDÄRBREMSANLAGE EINES FAHRZEUGS UND VERFAHREN ZU DEREN STEUERUNG**
SECONDARY BRAKING SYSTEM OF A VEHICLE AND METHOD FOR CONTROLLING THE SAME
SYSTÈME DE FREINAGE SECONDAIRE D'UN VÉHICULE ET SON PROCÉDÉ DE COMMANDE

(30) Priorität: 11.08.2020 DE 102020121082
(43) Veröffentlichungstag der Anmeldung: 16.02.2022
(73) Patentinhaber: ZF CV Systems Global GmbH, 3006 Bern (CH)
(72) Erfinder: HAVERKAMP, Michael, 30455 Hannover (DE); VOLKER, Lars, 30926 Seelze (DE)
(74) Vertreter: ZF Friedrichshafen AG

(56) Entgegenhaltungen:
- EP-B1- 2 197 715
- WO-A1-2018/007799
- DE-A1-102017 122 772
- US-B1- 6 312 060

## Beschreibung

Die Erfindung betrifft eine elektronisch steuerbare druckmittelbetriebene Sekundärbremsanlage eines Fahrzeugs, beispielsweise eines Nutzfahrzeugs, die sowohl als Feststellbremsanlage als auch als Hilfsbremsanlage nutzbar ist. Die Sekundärbremsanlage weist Federspeicherbremszylinder auf, welche an Radbremsen mindestens einer Fahrzeugachse angeordnet sind. Zudem ist ein direkt oder indirekt elektronisch steuerbares Bremssteuerventils vorhanden, mittels dem die Bremskraft der Federspeicherbremszylinder durch eine Zufuhr von Druckmittel reduzierbar und durch eine Abfuhr von Druckmittel vergrößerbar ist. Außerdem weist die Sekundärbremsanlage eine elektronische Bremssteuereinheit zur Steuerung des Bremssteuerventils in Abhängigkeit von dem aktuellen Wert eines Bremswertsignals auf. Die Erfindung betrifft außerdem ein Verfahren zur Steuerung einer derartigen Sekundärbremsanlage in verschiedenen Betriebsarten in Abhängigkeit von dem Bremswertsignal.

Fahrzeuge, die vorwiegend für Fahrten auf befestigten Straßen oder für den Einsatz in der Land- und Forstwirtschaft und somit auch für Fahrten abseits befestigter Straßen vorgesehen sind, weisen oft eine druckmittelbetriebene Primärbremsanlage und eine von dieser unabhängig betreibbare Sekundärbremsanlage auf. Bei der Primärbremsanlage handelt es sich üblicherweise um eine Betriebsbremsanlage, die als hydraulische Bremsanlage oder als Druckluftbremsanlage ausgebildet sein kann, und die meistens zwei Bremskreise aufweist, denen mit Druckmittel betätigbare Radbremszylinder zugeordnet sind. Die Radbremszylinder der Bremskreise sind an unterschiedlichen Fahrzeugachsen angeordnet, beispielsweise die Radbremszylinder des ersten Bremskreises an der Vorderachse und die Radbremszylinder des zweiten Bremskreises an der Hinterachse des Fahrzeugs.

Die Sekundärbremsanlage kann ebenfalls druckmittelbetrieben ausgebildet sein und Hydrauliköl oder Druckluft als Druckmittel nutzen. Die Sekundärbremsanlage umfasst üblicherweise Federspeicherbremszylinder, welche an den Radbremsen nur einer Fahrzeugachse angeordnet sind, und deren Bremskraft durch die Zufuhr von Druckmittel reduzierbar und durch die Abfuhr von Druckmittel vergrößerbar ist. Die Sekundärbremsanlage ist zumindest als Feststellbremsanlage nutzbar, wobei die Federspeicherbremszylinder zum Einlegen der Feststellbremse vollständig von dem Druckmittel entlastet und zum Lösen der Feststellbremse mit dem maximalen Arbeitsdruck mit dem Druckmittel beaufschlagt werden. Die Sekundärbremsanlage kann jedoch auch als Hilfsbremsanlage genutzt werden, welche bei einem Ausfall der Betriebsbremsanlage zum Abbremsen des Fahrzeugs zur Anwendung gelangt. Hierzu ist ein steuerbares Bremssteuerventil erforderlich, mittels dem eine dosierte Zufuhr und Abfuhr von Druckmittel in beziehungsweise aus den Federspeicherbremszylindern und somit eine abgestufte Abbremsung des Fahrzeugs möglich ist.

Da elektronisch gesteuerte Bremsanlagen im Vergleich mit druckgesteuerten Bremsanlagen deutliche Vorteile aufweisen, nämlich eine genauere Steuerung der Bremskräfte an den Radbremsen der Fahrzeugachsen, ein schnelleres Ansprechverhalten der Radbremsen auf ein geändertes Bremswertsignal, ein geringerer apparativer Aufwand für die Steuerungseinrichtung sowie eine leichtere Adaptierbarkeit der Steuerungseinrichtung an unterschiedliche Fahrzeuge und Bremsanlagen, sind auch Sekundärbremsanlagen zunehmend mit elektronischen Steuerungseinrichtungen versehen. Bei diesen Sekundärbremsanlagen sind die Federspeicherbremszylinder jeweils über ein direkt oder indirekt elektronisch steuerbares Bremssteuerventil durch eine Verbindung mit einer Druckmittelquelle mit Druckmittel beaufschlagbar und durch eine Verbindung mit einer Druckmittelsenke von Druckmittel entlastbar sind.

Bei elektronisch gesteuerten Sekundärbremsanlagen besteht jedoch die Möglichkeit, dass die elektrische Energieversorgung einer zugeordneten elektronischen Bremssteuereinheit unterbrochen wird, dass das elektronische Bremswertsignal störungsbedingt ausfällt, oder dass eine elektronische Störung innerhalb oder außerhalb der Bremssteuereinheit auftritt. Für diesen Fall sollte sichergestellt sein, dass der aktuelle Betriebszustand der Sekundärbremsanlage beibehalten wird. Hierdurch soll beispielsweise verhindert werden, dass die von den Federspeicherbremszylindern betätigten Radbremsen in der Feststellbremsfunktion bei abgestelltem Fahrzeug sowie eingelegter Feststellbremse gelöst oder während der Fahrt unabhängig von einem gegebenenfalls vorliegenden Bremswertsignal mit maximaler Bremskraft betätigt werden.

In der US 6 312 060 B1 wird ein Bremssystem nach dem Oberbegriff des Anspruchs 1 beschrieben.

Bei einer aus der DE 10 2008 007 877 B3 bekannten Parkbremseinrichtung eines Fahrzeugs, die auch als Hilfsbremsanlage genutzt werden kann, ist das Bremssteuerventil als ein druckgesteuertes Relaisventil ausgebildet, an dessen Arbeitsanschluss die Federspeicherbremszylinder angeschlossen sind. Dem Steuereingang des Relaisventils ist ein Sicherheitsventil vorgeschaltet, welches als ein druckgesteuertes 3/2-Wege-Schaltventil mit zwei Eingängen und einem Ausgang ausgebildet ist. Bei druckführendem Steuereingang verbindet das Sicherheitsventil den Ausgang mit dem ersten Eingang, bei drucklosem Steuereingang den Ausgang mit dem zweiten Eingang. Der Ausgang und der erste Eingang des Sicherheitsventils sind über ein Select-Low-Ventil und anschließend über ein Select-High-Ventil mit den Steuereingängen des Relaisventils verbunden. Den beiden Eingängen des Sicherheitsventils ist jeweils ein 3/2-Wege-Magnetschaltventil vorgeschaltet, über welche der jeweilige Eingang wechselweise mit einer Druckmittelquelle oder der Umgebung verbindbar ist. Im unbestromten Zustand verbindet das erste Magnetschaltventil den zugeordneten ersten Eingang des Sicherheitsventils mit der Druckmittelquelle, wogegen das zweite Magnetschaltventil im unbestromten Zustand den zugeordneten zweiten Eingang des Sicherheitsventils mit der Umgebung verbindet. Durch die Rückkopplung des ersten Eingangs und des Ausgangs des Sicherheitsventils mit dessen Steuereingang ist sichergestellt, dass sich der Schaltzustand des Sicherheitsventils und der an dem Steuereingang des Relaisventils anliegende Steuerdruck bei abgeschalteten Magnetventilen nicht ändern und somit der aktuelle Betriebszustand der Feststellbremsanlage beibehalten wird.
In der DE 10 2015 114 176 B3 ist eine elektropneumatische Feststellbremsanlage beschrieben, bei der das Bremssteuerventil ebenfalls als ein druckgesteuertes Relaisventil ausgebildet ist, an dessen Arbeitsanschluss die Federspeicherbremszylinder angeschlossen sind. Dem Steuereingang des Relaisventils sind ein Einlassventil und ein Auslassventil vorgeschaltet, die jeweils als ein 2/2-Wege-Magnetschaltventil ausgebildet sind. Das Einlassventil ist im unbestromten Zustand geschlossen und verbindet den Steuereingang des Relaisventils im bestromten Zustand mit einer an eine Druckluftquelle angeschlossenen Vorratsleitung. Das Auslassventil ist im unbestromten Zustand ebenfalls geschlossen und verbindet den Steuereingang des Relaisventils im bestromten Zustand mit einem Entlüftungsausgang. Die Ansteuerung der Einlass- und der Auslassventile erfolgt über ein elektronisches Steuergerät, welches an eine erste elektrische Energieversorgung angeschlossen ist. Über einen von einem Fahrer betätigbaren Schalter kann eine zweite elektrische Energieversorgung mit dem elektronischen Steuergerät oder zusammen mit einer separaten Schaltvorrichtung mit den Einlass- und Auslassventilen verbunden werden. Mit der Schaltvorrichtung und/oder der zweiten Energieversorgung ist es bei einem Ausfall der ersten Energieversorgung oder beim Auftreten einer elektronischen Störung möglich, zumindest zum Einlegen der Feststellbremse die Federspeicherbremszylinder noch vollständig entlüften zu können.

Eine andere elektronisch steuerbare Feststellbremsanlage, bei welcher das Bremssteuerventil als ein druckgesteuertes Relaisventil ausgebildet ist, ist aus der WO 2019/068320 A1 bekannt. Dem Steuereingang des Relaisventils ist eine elektropneumatische Steuereinheit vorgeschaltet, welche ein Proportionalventil und eine elektronische Steuereinheit aufweist. Eine einen Druckluftspeicher umfassende Druckluftquelle ist über eine Vorratsleitung mit einem in Richtung der Druckluftquelle sperrenden Rückschlagventil an den Vorratseingang des Relaisventils angeschlossen. Einem Eingang der elektropneumatischen Steuereinheit ist ein 3/2-Wege-Magnetschaltventil mit zwei Eingängen und einem Ausgang vorgeschaltet, das von der elektronischen Steuereinheit ansteuerbar ist. Im unbestromten Zustand ist der Ausgang des Magnetschaltventils mit dem ersten Eingang verbunden, welcher zwischen der Druckluftquelle und dem Rückschlagventil an die Vorratsleitung angeschlossen ist. Im bestromten Zustand ist der Ausgang des Magnetschaltventils mit dem zweiten Eingang verbunden, der zwischen dem Rückschlagventil und dem Relaisventil an die Vorratsleitung angeschlossen ist. Bei einem Ausfall der Stromversorgung für die elektronische Steuereinheit oder beim Auftreten einer elektronischen Störung wird das Magnetschaltventil in seine unbestromter Ruhestellung umgeschaltet beziehungsweise in dieser gehalten. Bei Fahrzeugstillstand und abgeschalteter Druckluftversorgung kann der Druckluftspeicher von dem Fahrer durch ein mehrmaliges Durchtreten des Bremspedals entlüftet werden, was in der betreffenden Schaltstellung des Magnetschaltventils zur Entlüftung der Federspeicherbremszylinder und somit zum Einlegen der Feststellbremse führt.

Dagegen ist aus der DE 10 2017 007 780 A1 ein elektropneumatisches Feststellbremsmodul bekannt, bei dem das Bremssteuerventil als ein druckgesteuertes 3/2-Wege-Schaltventil mit einem Vorratseingang, einem Arbeitsanschluss und einem Entlüftungsausgang ausgebildet ist. An den Arbeitsanschluss des Bremssteuerventils sind über eine Arbeitsleitung mit einem Sperrventil die Federspeicherbremszylinder angeschlossen. Dem Steuereingang des Bremssteuerventils ist ein Vorsteuerventil vorgeschaltet, welches als ein bistabiles 3/2-Wege-Magnetschaltventil ausgebildet ist. Das Vorsteuerventil ist zur Belüftung sowie Entlüftung des Steuereingangs des Bremssteuerventils vorgesehen und von einem elektronischen Steuergerät steuerbar. Das Sperrventil ist als ein druckgesteuertes 2/2-Wege-Schaltventil ausgebildet, welches bei drucklosem Steuereingang geöffnet und bei druckführendem Steuereingang geschlossen ist. Dem Steuereingang des Absperrventils ist ein Vorsteuerventil vorgeschaltet, welches als ein 3/2-Wege-Magnetschaltventil ausgebildet ist. Das Vorsteuerventil ist zur Belüftung und Entlüftung des Steuereingangs des Sperrventils vorgesehen und von dem elektronischen Steuergerät steuerbar. Der Steuereingang des Sperrventils wird im bestromten Zustand des Vorsteuerventils belüftet und im unbestromten Zustand des Vorsteuerventils entlüftet. Mittels eines gepulsten Öffnen und Schließen des Sperrventils ist je nach Schaltstellung des Bremssteuerventils eine abgestufte Belüftung oder Entlüftung der Federspeicherbremszylinder möglich. Bei einem Ausfall der elektrischen Energieversorgung der elektronischen Steuereinheit oder beim Auftreten einer elektronischen Störung verbleibt das Bremssteuerventil in seiner Schaltstellung, und das Sperrventil schaltet in seine Offenstellung beziehungsweise es verbleibt in dieser Offenstellung. Bei belüfteten Federspeicherbremszylindern können diese bei abgeschalteter Druckluftversorgung von dem Fahrer durch ein mehrmaliges Durchtreten des Bremspedals entlüftet und somit die Feststellbremse eingelegt werden.

Relaisventile sind komplex aufgebaut, entsprechend teuer herstellbar und relativ störungsanfällig. Darüber hinaus weisen die Steuerungseinrichtungen der bekannten Feststellbremsanlagen und des Feststellbremsmoduls vergleichsweise kompliziert aufgebaute Ventilanordnungen sowie teilweise einen eingeschränkten Funktionsumfang auf.

Der vorliegenden Erfindung liegt daher die Aufgabe zugrunde, eine elektronisch steuerbare druckmittelbetriebene Sekundärbremsanlage eines Fahrzeugs der eingangs genannten Art vorzustellen, welche uneingeschränkt sowohl als Feststellbremsanlage als auch als Hilfsbremsanlage nutzbar ist, und deren Steuerungseinrichtung eine relativ einfach aufgebaute Ventilanordnung aufweist. Zudem soll ein Verfahren zur Steuerung einer derartigen Sekundärbremsanlage in verschiedenen Betriebsarten in Abhängigkeit von dem aktuellen Wert eines Bremswertsignals vorgestellt werden.

Die vorrichtungsbezogene Aufgabe ist durch eine Sekundärbremsanlage mit den Merkmalen des Anspruchs 1 gelöst. Die Lösung der verfahrensbezogenen Aufgabe wird mit den Verfahrensschritten gemäß dem unabhängigen Verfahrensanspruch gelöst. Die jeweils darauf rückbezogenen abhängigen Ansprüche definieren vorteilhafte Ausgestaltungen und Weiterbildungen.

Demnach betrifft die Erfindung eine elektronisch steuerbare druckmittelbetriebene Sekundärbremsanlage eines Fahrzeugs, beispielsweise eines Nutzfahrzeugs, die sowohl als Feststellbremsanlage als auch als Hilfsbremsanlage nutzbar ist. Diese Sekundärbremsanlage weist Federspeicherbremszylinder auf, welche an Radbremsen mindestens einer Fahrzeugachse angeordnet sind. Außerdem weist die Sekundärbremsanlage ein direkt oder indirekt elektronisch steuerbares Bremssteuerventil auf, mittels dem die Bremskraft der Federspeicherbremszylinder durch eine Zufuhr von Druckmittel reduzierbar und durch eine Abfuhr von Druckmittel vergrößerbar ist. Zudem ist eine elektronische Bremssteuereinheit zur Steuerung des Bremssteuerventils in Abhängigkeit von dem aktuellen Wert eines Bremswertsignals vorhanden.

Ferner ist bei dieser Sekundärbremsanlage vorgesehen, dass das Bremssteuerventil als ein 3/3-Wege-Proportionalventil mit einem Druckmitteleingang, einem Druckmittelausgang und einem Arbeitsanschluss ausgebildet ist, wobei der Arbeitsanschluss kontinuierlich zwischen einer Verbindung mit dem Druckmittelausgang und dem Druckmitteleingang verstellbar ist, dass der Druckmitteleingang über eine Vorratsleitung mit einer Druckmittelquelle, der Druckmittelausgang mit einer Druckmittelsenke und der Arbeitsanschluss über eine Arbeitsleitung mit den Federspeicherbremszylindern verbunden ist, und dass in der Arbeitsleitung ein steuerbares, in Richtung zu dem Bremssteuerventil sperrendes Rückschlagventil angeordnet ist.

Durch die Ausbildung des Bremssteuerventils als ein Proportionalventil und die Anordnung eines steuerbaren, also bedarfsweise entsperrbaren Rückschlagventils in der Arbeitsleitung zwischen dem Bremssteuerventil und den Federspeicherbremszylindern weist die erfindungsgemäße Ventilanordnung zur Einstellung des Arbeitsdruckes in den Federspeicherbremszylindern vergleichsweise einfache und kostengünstig herstellbare Ventile auf. Diese Ventile und Bauteile sowie deren Anordnung gewährleisten den geforderten Funktionsumfang, da am Arbeitsanschluss des Bremssteuerventils jeder beliebige Arbeitsdruck zwischen dem durch den Umgebungsdruck gegebenen minimalen Arbeitsdruck und dem durch den in der Vorratsleitung anstehenden Vorratsdruck gegebenen maximalen Arbeitsdruck einstellbar ist.

Soll die Bremskraft der Federspeicherbremszylinder reduziert werden, so wird durch eine dem aktuell vorliegenden Wert des Bremswertsignals entsprechende Ansteuerung des Bremssteuerventils Druckmittel aus der Vorratsleitung über das Bremssteuerventil, die Arbeitsleitung sowie das in dieser angeordnete Rückschlagventil entgegen dessen Sperrrichtung in die Federspeicherbremszylinder gefördert und damit die zugeordneten Radbremsen gelöst.

Soll dagegen die Bremskraft der Federspeicherbremszylinder erhöht werden, so wird durch eine dem aktuellen Wert des Bremswertsignals entsprechende Ansteuerung des Bremssteuerventils sowie durch die Entsperrung des Rückschlagventils Druckmittel aus den Federspeicherbremszylindern über die Arbeitsleitung, das in dieser angeordnete Rückschlagventil sowie das Bremssteuerventil in die Druckmittelsenke gefördert und damit die zugeordneten Radbremsen unter der Wirkung der Federspeicherfedern stärker betätigt. Die erfindungsgemäße Sekundärbremsanlage ist somit uneingeschränkt sowohl als Feststellbremsanlage als auch als Hilfsbremsanlage nutzbar.

Zur Lösung der vorrichtungsbezogenen Aufgabe ist das Bremssteuerventil als ein Magnetventil ausgebildet, dessen Elektromagnet über eine elektrische Steuerleitung unmittelbar von der Bremssteuereinheit ansteuerbar ist, und dessen Arbeitsanschluss im unbestromten Zustand mit dem Druckmittelausgang sowie im maximal bestromten Zustand ungedrosselt mit dem Druckmitteleingang verbunden ist. Bei einem Ausfall der elektrischen Energieversorgung der elektronischen Bremssteuereinheit oder beim Auftreten einer elektronischen Störung ist der Arbeitsanschluss des Bremssteuerventils somit drucklos sowie bei nicht entsperrtem Rückschlagventil von den Federspeicherbremszylindern getrennt. Der wirksame Arbeitsdruck ist dann in den Federspeicherbremszylindern eingeschlossen, sodass der aktuelle Betriebszustand der Sekundärbremsanlage beibehalten wird.

Die unmittelbare elektrische Ansteuerung des Bremssteuerventils von der Bremssteuereinheit hat den Vorteil einer schnellen Einsteuerung des gewünschten Arbeitsdruckes in den Federspeicherbremszylindern. Ein möglicher Nachteil dieser Ausführung kann aber darin bestehen, dass das Bremssteuerventil große Öffnungsquerschnitte zur schnellen Zufuhr und Abfuhr des Druckmittels in beziehungsweise aus den Federspeicherbremszylindern aufweisen könnte, welche einen relativ großen Elektromagneten und entsprechend hohe Steuerströme des Bremssteuerventils erfordern würden.

Gemäß einer nicht erfindungsgemäßen Alternative, zur Vermeidung dieses Nachteils kann das Bremssteuerventil alternativ dazu auch druckgesteuert ausgebildet sein, wobei der Arbeitsanschluss des Bremssteuerventils bei drucklosem Steuereingang mit dem Druckmittelausgang und bei mit maximalem Stelldruck beaufschlagten Steuereingang ungedrosselt mit dem Druckmitteleingang verbunden ist. Dem Bremssteuerventil ist in diesem Fall ein als Proportionalventil ausgebildetes Vorsteuerventil zugeordnet, mittels dem der Steuereingang des Bremssteuerventils abgestuft mit einer Druckmittelquelle oder einer Druckmittelsenke verbindbar ist. Bei drucklosem Steuereingang ist der Arbeitsanschluss des Bremssteuerventils somit drucklos und bei nicht entsperrtem Rückschlagventil von den Federspeicherbremszylindern getrennt. Der wirksame Arbeitsdruck ist dann in den Federspeicherbremszylindern eingeschlossen, sodass der aktuelle Betriebszustand der Sekundärbremsanlage beibehalten wird.

Um den Steuereingang des Bremssteuerventils mit einem beliebigen, zwischen dem Umgebungsdruck und dem Vorratsdruck liegenden Stelldruck beaufschlagen zu können, ist das Vorsteuerventil als ein 3/3-Wege-Magnetventil mit einem Druckmitteleingang, einem Druckmittelausgang und einem Steuerausgang ausgebildet, bei dem der Druckmitteleingang über eine Anschlussleitung mit der Vorratsleitung, der Druckmittelausgang mit der Druckmittelsenke und der Steuerausgang über eine Steuerleitung mit dem Steuereingang des Bremssteuerventils verbunden ist, und bei dem der Steuerausgang im unbestromten Zustand mit dem Druckmittelausgang sowie im maximal bestromten Zustand ungedrosselt mit dem Druckmitteleingang verbunden ist. Der Elektromagnet des Vorsteuerventils ist über eine elektrische Steuerleitung von der Bremssteuereinheit ansteuerbar.

Durch diesen Aufbau ist der Steuereingang des Bremssteuerventils im unbestromten Zustand des Vorsteuerventils drucklos und im maximal bestromten Zustand des Vorsteuerventils mit dem durch den Vorratsdruck gegebenen maximalen Steuerdruck beaufschlagt. Wegen der nicht erfindungsgemäßen druckgesteuerten Ausführungsform des Bremssteuerventils sind nur relativ niedrige Steuerströme zur Betätigung des Vorsteuerventils notwendig, welches aufgrund der niedrigen Steuervolumenströme vorteilhaft vergleichsweise kleine Öffnungsquerschnitte aufweist.

Das steuerbare Rückschlagventil ist bevorzugt druckgesteuert ausgebildet und durch eine Druckbeaufschlagung seines Steuereingangs entsperrbar. Dem Rückschlagventil ist dann ein Vorsteuerventil zugeordnet, mittels dem der Steuereingang des Rückschlagventils wechselweise mit einer Druckmittelquelle oder einer Druckmittelsenke verbindbar ist.

Das dem steuerbaren Rückschlagventil zugeordnete Vorsteuerventil ist als ein 3/2-Wege-Magnetschaltventil mit einem Druckmitteleingang, einem Druckmittelausgang und einem Steuerausgang ausgebildet, bei dem der Druckmitteleingang über eine Anschlussleitung mit der Vorratsleitung, der Druckmittelausgang mit der Druckmittelsenke und der Steuerausgang mit dem Steuereingang des Rückschlagventils verbunden ist, und bei dem der Steuerausgang des Vorsteuerventils im unbestromten Zustand mit dem Druckmittelausgang sowie im bestromten Zustand mit dem Druckmitteleingang verbunden ist. Der Elektromagnet des Vorsteuerventils ist über eine elektrische Steuerleitung von der Bremssteuereinheit ansteuerbar.

Zur Messung und Überwachung des in den Federspeicherbremszylindern anliegenden Arbeitsdruckes ist vorteilhaft ein Drucksensor an die Arbeitsleitung angeschlossen, welcher über eine elektrische Sensorleitung mit der Bremssteuereinheit verbunden ist.

Zur Vereinfachung der Montage der Ventile im Fahrzeug und zur Vermeidung von Anschlussfehlern ist bevorzugt vorgesehen, dass zumindest das Bremssteuerventil, das Rückschlagventil und das Vorsteuerventil beziehungsweise die Vorsteuerventile in einem Bremssteuermodul baulich zusammengefasst sind.

Die Bremssteuereinheit weist bevorzugt einen Datenspeicher auf, in dem für unterschiedliche Betriebsarten gültige Kennlinien zur Einstellung des Arbeitsdruckes in den Federspeicherbremszylindern in Abhängigkeit eines Bremswertsignals abgespeichert sind. Durch das Abspeichern entsprechender Kennlinien in dem Datenspeicher der elektronischen Steuereinheit ist neben dem Betrieb der Sekundärbremsanlage in unterschiedlichen Betriebsarten auch eine Anpassung der Steuerung an unterschiedliche Fahrzeuge beziehungsweise Fahrzeugtypen sowie an unterschiedliche Steuerventile und Druckmittelleitungen auf einfache Weise möglich.

Die Sekundärbremsanlage kann als eine hydraulische Bremsanlage ausgebildet sein, deren Druckmittelquelle eine Ölpumpe, eine hydraulische Druckaufbereitungseinrichtung sowie einen hydraulischen Druckspeicher umfasst, und deren Druckmittelsenke durch mindestens einen hydraulischen Sammelbehälter gebildet ist.

Ebenso kann die Sekundärbremsanlage auch als eine Druckluftbremsanlage ausgebildet sein, deren Druckmittelquelle einen Kompressor, eine pneumatische Druckaufbereitungseinrichtung sowie einen pneumatischen Druckspeicher aufweist, und deren Druckmittelsenke durch mindestens einen Entlüftungsausgang gebildet ist.

Zur Lösung der verfahrensbezogenen Aufgabe ist ein Verfahren zur Steuerung einer elektronisch steuerbaren, druckmittelbetriebenen Sekundärbremsanlage eines Fahrzeugs vorgesehen, welche sowohl als Feststellbremsanlage als auch als Hilfsbremsanlage nutzbar ist, wobei diese Sekundärbremsanlage folgendes aufweist:
- Federspeicherbremszylinder, welche an Radbremsen mindestens einer Fahrzeugachse angeordnet sind,
- ein direkt oder indirekt elektronisch steuerbares Bremssteuerventil, mittels dem die Bremskraft der Federspeicherbremszylinder durch eine Zufuhr von Druckmittel reduzierbar und durch eine Abfuhr von Druckmittel vergrößerbar ist,
- sowie eine elektronische Bremssteuereinheit mit einem Datenspeicher, welche das Bremssteuerventil in Abhängigkeit von dem aktuellen Wert eines Bremswertsignals steuert.

Verfahrensgemäß ist hierbei vorgesehen, dass der Arbeitsdruck p_{FSB} in den Federspeicherbremszylindern in Abhängigkeit von dem aktuellen Wert des Bremswertsignals S_{BW} unter Ansteuerung des Bremssteuerventils sowie eines diesem nachgeschalteten, steuerbaren, in Richtung des Bremssteuerventils sperrenden Rückschlagventils eingestellt wird.

Das Bremswertsignal S_{BW} gibt die aktuelle Bremsanforderung beziehungsweise den aktuellen Bremsbedarf des Fahrers wieder. Der aktuelle Wert des Bremswertsignals S_{BW} kann als zurückgelegter Stellweg eines Stellelements in Bezug zum maximal möglichen Stellweg in Prozent angegeben werden. Ein Wert von 0% des Bremswertsignals S_{BW} bedeutet dann eine nicht vorhandene Bremsanforderung und ein Wert von 100% des Bremswertsignals S_{BW} eine maximale Bremsanforderung. Das Bremswertsignal S_{BW} kann in an sich bekannter Weise mittels eines Wegsensors erzeugt werden, welcher an einem Fußbremsventil des Fahrzeugs angeordnet sowie über eine elektrische Sensorleitung mit der Bremssteuereinheit verbunden ist. Alternativ dazu kann das Bremswertsignal S_{BW} auch mittels eines Drucksensors erzeugt werden, welcher an eine Bremsleitung eines Bremskreises der Primärbremsanlage des Fahrzeugs angeschlossen sowie über eine elektrische Sensorleitung mit der Bremssteuereinheit verbunden ist.

Die verfahrensgemäße Einstellung des genannten Arbeitsdrucks p_{FSB} erfolgt vorzugsweise unter Nutzung von Kennlinien A, B, C, welche beispielsweise von Fahrzeugherstellern für unterschiedliche Fahrzeugtypen, Fahrzeugmodelle sowie unterschiedliche Betriebsarten der Sekundärbremsanlage zumindest mitbestimmt sind. Diese Kennlinien A, B, C sind bevorzugt in einem Datenspeicher der Bremssteuereinheit abgespeichert und können somit recht unterschiedliche Druckabsenkungsverläufe repräsentieren.

Die Sekundärbremsanlage kann gemäß einer Zusatzbremsfunktion genutzt werden, bei welcher diese die Betriebsbremsanlage des Fahrzeugs dann abbremsend unterstützt, wenn Werte eines Bremswertsignals vorliegen, welche einen Bremsbedarf des Fahrers signalisieren, der größer ist als diejenige Bremsverzögerung des Fahrzeugs, welche von der Betriebsbremsanlage alleine bewältigbar wäre. Hierzu wird der Arbeitsdruck p_{FSB} in den Federspeicherbremszylindern ausgehend von einem maximalen Arbeitsdruck p_{FSB_max} bei einem minimalen Wert des Bremswertsignals S_{BW} ab einem festgelegten Startwert des Bremswertsignals S_{BW_Start} und weiter ansteigenden Werten des Bremswertsignals S_{BW} bis auf einen vorbestimmten Arbeitsdruck p_{FSB} bei einem maximalen Wert des Bremswertsignals S_{BW} abgesenkt. Die Einstellung des Arbeitsdrucks p_{FSB} der Sekundärbremsanlage erfolgt dabei derartig, dass sich die zusätzliche Bremswirkung der Sekundärbremsanlage während der Nutzung der Zusatzbremsfunktion für den Fahrzeugführer gefühlt harmonisch in die Gesamtwirkung der Fahrzeugbremsanlage einfügt.

Weiter kann vorgesehen sein, dass die Sekundärbremsanlage in einer Hilfsbremsfunktion genutzt wird, bei welcher die Bremstätigkeit der Betriebsbremsanlage durch die Bremstätigkeit der Sekundärbremsanlage vollständig ersetzt wird. Hierzu wird der Arbeitsdruck p_{FSB} der Sekundärbremsanlage ausgehend von einem maximalen Arbeitsdruck p_{FSB_max} bei einem minimalen Wert des Bremswertsignals S_{BW} mit ansteigendem Wert des Bremswertsignals S_{BW} bis auf einen minimalen Arbeitsdruck p_{FSB} bei einem maximalen Wert des Bremswertsignals S_{BW} abgesenkt. Dieser minimale Arbeitsdruck p_{FSB} kann beispielsweise 10% bis 20% des genannten maximalen Arbeitsdrucks p_{FSB_max} betragen, einschließlich der Bereichsgrenzen. Dieser minimale Arbeitsdruck p_{FSB} ist so gewählt, dass mittels der Sekundärbremsanlage eine Fahrzeugverzögerung beziehungsweise negative Beschleunigung von wenigstens 2,2 m/s² erreicht wird.

Die Hilfsbremsfunktion wird im Stillstand des Fahrzeugs sowie bei geringer Fahrzeuggeschwindigkeit genutzt, wodurch an den Fahrzeugbremsen vergleichsweise wenig Reibungswärme erzeugt wird. Zudem ist in diesem Betriebsbereich des Fahrzeugs die Erwartung des Fahrzeugführers an die Bremswirkung der Sekundärbremsanlage während Nutzung der Hilfsbremsfunktion nicht sonderlich hoch.

Bei der Nutzung der Zusatzbremsfunktion und/oder der Hilfsbremsfunktion kann die jeweilige Druckabsenkung einen Verlauf aufweisen, welcher wie erwähnt auch Vorgaben des Fahrzeugherstellers beachtet. Diese Vorgaben für die gewünschten Druckabsenkungsverläufe können für unterschiedliche Fahrzeugtypen sowie unterschiedliche Fahrzeugmodelle gelten und ein jeweils gewünschtes Bremsverhalten berücksichtigen. Die Druckabsenkungsverläufe können auch das ermittelte Gesamtgewicht des Fahrzeugs berücksichtigen. So kann beispielsweise vorgesehen sein, dass bei der Nutzung der Zusatzbremsfunktion und/oder der Hilfsbremsfunktion der Arbeitsdruck p_{FSB} der Sekundärbremsanlage ausgehend von einem maximalen Arbeitsdruck p_{FSB_max} bei einem minimalen Wert des Bremswertsignals S_{BW} mit ansteigendem Wert des Bremswertsignals S_{BW} progressiv bis auf einen minimalen Arbeitsdruck p_{FSB} bei einem maximalen Wert des Bremswertsignals S_{BW} abgesenkt wird. Durch einen solchen progressiven Verlauf der Druckabsenkung und der damit verbundenen progressiven Zunahme der Bremskraft der Federspeicherbremszylinder wird die Änderung der Bremswirkung dem üblichen Verhalten einer druckgesteuerten Primärbremsanlage angepasst.

Schließlich kann die Sekundärbremsanlage in einer Notbremsfunktion genutzt werden, bei welcher die Betriebsbremsanlage durch die Sekundärbremsanlage hinsichtlich deren Bremsfunktion vollständig ersetzt wird. Auch bei dieser Betriebsweise wird einen Fahrzeugverzögerung beziehungsweise eine negative Beschleunigung von wenigstens 2,2 m/s² erreicht. Da die Sekundärbremsanlage bei Nutzung der Notbremsfunktion als einzige Fahrzeugbremse, nämlich als Betriebsbremse betrieben wird, muss sie auch in der Lage sein, dass Fahrzeug aus höherer Geschwindigkeit vollständig bis zum Stillstand abzubremsen. Hierdurch wird zwar ein starker Verschleiß sowie vergleichsweise viel Reibungswärme an den angesteuerten Radbremsen des Fahrzeugs erzeugt, dies wird hier aber hingenommen, denn es soll ja ein äußerst seltener Notfall bewältigt werden.

Zum Betreiben der Sekundärbremsanlage in der Notbremsfunktion wird der Arbeitsdruck p_{FSB} der Sekundärbremsanlage ausgehend von einem maximalen Arbeitsdruck p_{FSB_max} bei einem minimalen Wert des Bremswertsignals S_{BW} mit ansteigendem Wert des Bremswertsignals beispielsweise linear bis zu einen geringstmöglichen Arbeitsdruck p_{FSB} bei einem maximalen Wert des Bremswertsignals S_{BW} abgesenkt. Dieser geringstmögliche Arbeitsdruck p_{FSB} kann beispielsweise 0% bis 5% des genannten maximalen Arbeitsdrucks p_{FSB_max} betragen, einschließlich der Bereichsgrenzen. Die negative Steigung der linearen Kennlinienkurve kann an den jeweiligen Fahrzeugtyp, das jeweilige Fahrzeugmodell und/oder das aktuellen Gesamtgewicht des Fahrzeugs angepasst sein und beispielsweise auch mit unterschiedlichen Steigungswerten gestuft verlaufen.

Demnach ist ersichtlich, dass der Verlauf der Absenkung des Arbeitsdrucks p_{FSB} der Sekundärbremsanlage an sich frei wählbar ist und im Wesentlichen davon abhängt, in welchen Fahrzeugtyp und in welchem Fahrzeugmodell die erfindungsgemäße Vorrichtung zur Steuerung der Sekundärbremsanlage verbaut ist. Außerdem kann bei der softwaremäßigen Einstellung des Abbremsverhaltens und damit des geschilderten Verlaufs der Absenkung des Arbeitsdrucks p_{FSB} der Sekundärbremsanlage das von dem Fahrzeugführer erwartete Bremsverhalten für die jeweilige Betriebssituation frei programmierbar eingestellt sein.

Sowohl bei der Nutzung der Hilfsbremsfunktion als auch bei der Nutzung der Notbremsfunktion erzeugt die Sekundärbremsanlage alleine den zum Abbremsen des Fahrzeugs notwendigen Arbeitsdruck. Da die Notbremsfunktion nur äußerst selten genutzt wird, sind die Radbremsen des Fahrzeugs vorzugsweise lediglich auf diejenige Bremsbelastung ausgelegt, welche maximal während der Nutzung der Hilfsbremsfunktion zu erwarten ist. Hierdurch ist auch weiterhin die Verwendung vergleichsweise kleiner und kostengünstiger Radbremsen möglich.

Schließlich kann vorgesehen sein, dass der Arbeitsdruck p_{FSB} der Sekundärbremsanlage ausgehend von einem maximalen Arbeitsdruck p_{FSB_max} bei einem minimalen Wert des Bremswertsignals S_{BW} mit ansteigendem Wert des Bremswertsignals S_{BW} bis auf einen minimalen Arbeitsdruck p_{FSB} bei einem maximalen Wert des Bremswertsignals S_{BW} abgesenkt wird, wobei der Verlauf dieser Arbeitsdruckabsenkung in Abhängigkeit von demjenigen Fahrzeugtyp, Fahrzeugmodell und/oder Fahrzeuggesamtgewicht zumindest mitbestimmt ist, in welchem das Verfahren genutzt wird.

Zur weiteren Verdeutlichung der Erfindung ist der Beschreibung eine Zeichnung mit zwei Ausführungsbeispielen beigefügt. In dieser zeigt
Fig. 1 eine erste Ausführungsform einer die Merkmale der Erfindung aufweisenden Sekundärbremsanlage eines Fahrzeugs in einer schematischen Ansicht,
Fig. 2 eine Ventilanordnung zur Steuerung der Sekundärbremsanlage gemäß Fig. 1 in einem vergrößerten Ausschnitt,
Fig. 3 eine zweite Ausführungsform einer die Merkmale nicht gemäß der Erfindung aufweisenden Sekundärbremsanlage eines Fahrzeugs in einer schematischen Ansicht,
Fig. 4 eine Ventilanordnung zur Steuerung der Sekundärbremsanlage gemäß Fig. 3 in einem vergrößerten Ausschnitt, und
Fig. 5 mehrere für unterschiedliche Betriebsarten der Sekundärbremsanlage gemäß Fig. 1 und Fig. 3 beispielhaft gültige Kennlinien in einem Diagramm.

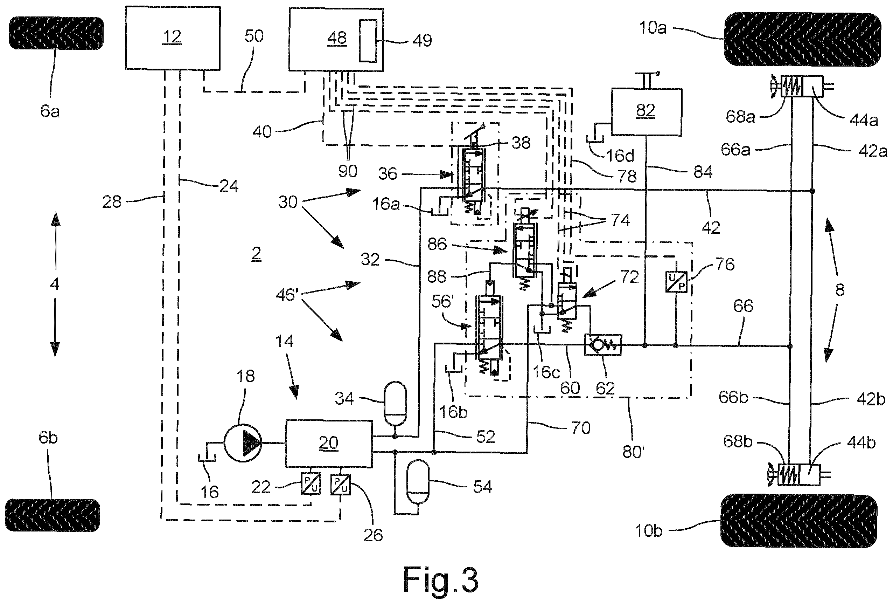

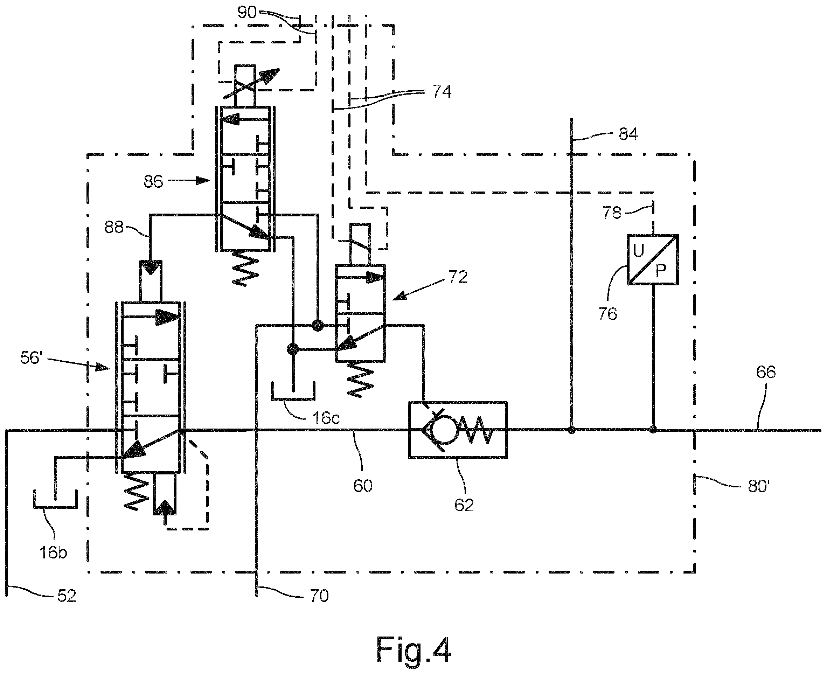

Eine Ausführungsform einer erfindungsgemäß ausgebildeten Sekundärbremsanlage 46 sowie ein Verfahren zur Steuerung einer derartigen Sekundärbremsanlage 46 werden nachfolgend beispielhaft anhand eines Fahrzeugs 2 beschrieben, welches für den Einsatz in der Land- und Forstwirtschaft vorgesehen ist. Die Ausführungsform der Sekundarbremsanlage 46' gemäß den Figuren 3 und 4 ist nicht erfindungsgemäß und dient lediglich der Veranschaulichung.

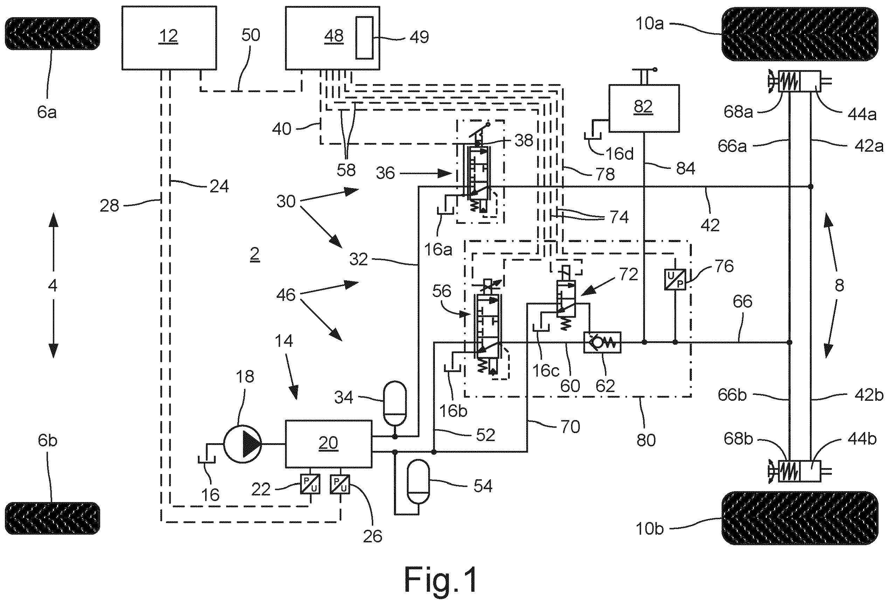

Das in Fig. 1 und in Fig. 3 jeweils schematisch abgebildete Fahrzeug 2 weist eine Vorderachse 4 mit zwei beidseitig angeordneten Vorderrädern 6a, 6b und eine Hinterachse 8 mit zwei ebenfalls beidseitig angeordneten Hinterrädern 10a, 10b auf. Das Fahrzeug 2 ist mit einer hydraulischen Primärbremsanlage 30 und mit einer hydraulischen Sekundärbremsanlage 46,46' ausgerüstet. Eine hydraulische Druckmittelquelle 14 umfasst eine Ölpumpe 18, von der Hydrauliköl aus einem hydraulischen Sammelbehälter 16 förderbar ist, eine hydraulische Druckmittelaufbereitungseinrichtung 20, in der das geförderte Hydrauliköl gereinigt, gekühlt und an zwei Vorratsleitungen 32, 52 geleitet wird. An den beiden Vorratsleitungen 32, 52 sind jeweils ein hydraulischer Drucksensor 22, 26 und ein hydraulischer Druckspeicher 34, 54 angeschlossen. Die beiden Drucksensoren 22, 26 sind über jeweils eine elektrische Sensorleitung 24, 28 mit einer zentralen elektronischen Steuereinheit 12 des Fahrzeugs 2 verbunden.

Die Primärbremsanlage 30 besteht aus einer Betriebsbremsanlage, die vorliegend beispielhaft nur einen Bremskreis umfasst. Diese Primärbremsanlage beziehungsweise Betriebsbremsanlage 30 umfasst die erste Vorratsleitung 32 mit dem zugeordneten ersten hydraulischen Druckspeicher 34, ein von dem Fahrer über ein Bremspedal mechanisch betätigbares Fußbremsventil 36, eine Bremsleitung 42 mit zwei Leitungszweigen 42a, 42b sowie einen jeweils an einen dieser Leitungszweige 42a, 42b angeschlossenen Betriebsbremszylinder 44a, 44b. Die Betriebsbremszylinder 44a, 44b sind an den Radbremsen der Hinterräder 10a, 10b angeordnet.

Das Fußbremsventil 36 ist als ein 3/3-Wege-Proportionalventil mit einem Druckmitteleingang, einem Druckmittelausgang und einem Bremsdruckausgang ausgebildet. An den Druckmitteleingang ist die erwähnte Vorratsleitung 32 angeschlossen. An den Druckmittelausgang ist ein druckloser hydraulischer Sammelbehälter 16a angeschlossen und an den Bremsdruckausgang ist die Bremsleitung 42 angeschlossen. Durch eine Axialverschiebung eines innerhalb des Fußbremsventil s 36 axialbeweglich gelagerten Ventilkolbens mittels des Bremspedals am Fußbremsventil 36 wird der in der Bremsleitung 42 und somit in den Betriebsbremszylindern 44a, 44b wirksame Bremsdruck kontinuierlich zwischen einem Nulldruck (Überdruck = 0 Pa) sowie einem durch den in der Vorratsleitung 32 anstehenden Vorratsdruck verstellt. Dadurch wird die über die Betriebsbremszylinder 44a, 44b auf die Radbremsen der Hinterräder 10a, 10b wirksame Bremskraft eingestellt.

Mittels eines an dem Fußbremsventil 36 angeordneten Wegsensor 38 wird der zurückgelegte Betätigungsweg des Ventilkolbens des Fußbremsventils 36 erfasst und über eine elektrische Sensorleitung 40 an eine elektronische Bremssteuereinheit 48 übertragen, in welcher aus dem Stellwegsignal ein Bremswertsignal S_{BW} beziehungsweise dessen aktueller Wert gebildet wird. Das Bremswertsignal S_{BW} spiegelt die Bremsanforderung des Fahrers wieder und kann einen beliebigen Wert zwischen 0% für eine nicht vorhandene Bremsanforderung und 100% für eine maximale Bremsanforderung annehmen. Die Bremssteuereinheit 48 steht über einen Datenbus 50, wie zum Beispiel einen CAN-Bus, mit der zentralen Steuereinheit 12 des Fahrzeugs 2 in Verbindung.

Die Sekundärbremsanlage 46, 46' umfasst die zweite Vorratsleitung 52 mit dem zugeordneten zweiten hydraulischen Druckspeicher 54, ein Bremssteuerventil 56, 56', eine eingangsseitige Arbeitsleitung 60, ein steuerbares Rückschlagventil 62 mit einem zugeordneten Vorsteuerventil 72, eine ausgangsseitige Arbeitsleitung 66 mit zwei Leitungszweigen 66a, 66b sowie einen jeweils an einen dieser beiden Leitungszweige 66a, 66b angeschlossenen Federspeicherbremszylinder 68a, 68b. Die beiden Federspeicherbremszylinder 68a, 68b sind an den Radbremsen der beiden Hinterräder 10a, 10b angeordnet und mit den Betriebsbremszylindern 44a, 44b kombiniert ausgebildet.

Das erwähnte Bremssteuerventil 56, 56' ist als ein 3/3-Wege-Proportionalventil mit einem Druckmitteleingang, einem Druckmittelausgang und einem Arbeitsanschluss ausgebildet, über welches der Arbeitsanschluss kontinuierlich zwischen einer Verbindung mit dem Druckmittelausgang und dem Druckmitteleingang verstellbar ist. Der Druckmitteleingang ist über die erste Vorratsleitung 52 mit der hydraulischen Druckmittelquelle 14, der Druckmittelausgang mit einem drucklosen hydraulischen Sammelbehälter 16b und der Arbeitsanschluss über die beiden Arbeitsleitungen 60, 66 mit den beiden Federspeicherbremszylindern 68a, 68b verbunden. Das steuerbare Rückschlagventil 62 ist in Richtung zu dem Bremssteuerventil 56, 56' sperrend in der eingangsseitgen Arbeitsleitung 60 angeordnet.

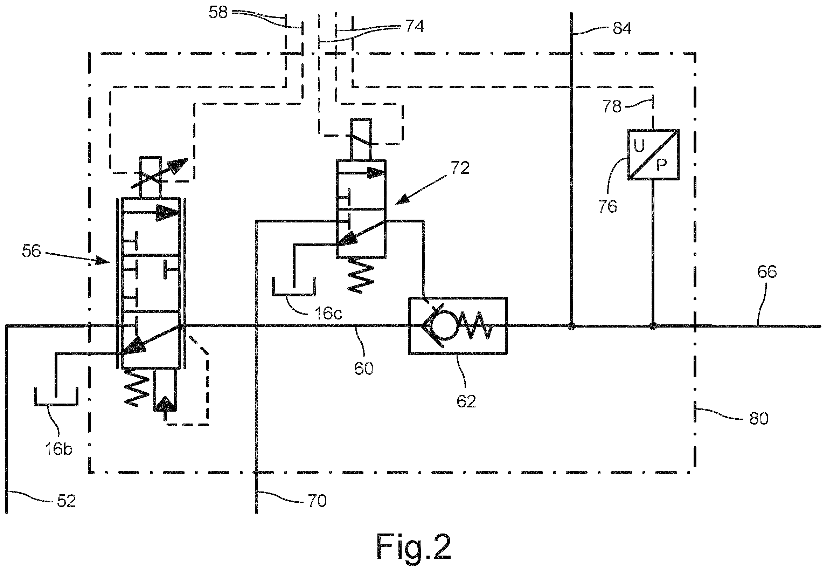

Wie insbesondere auch aus dem in Fig. 2 vergrößert abgebildeten Ausschnitt aus Fig. 1 hervorgeht, ist das Bremssteuerventil 56 gemäß der dargestellten ersten Ausführungsform der Sekundärbremsanlage 46 als ein Magnetventil ausgebildet, dessen Elektromagnet über eine elektrische Steuerleitung 58 unmittelbar von der Bremssteuereinheit 48 ansteuerbar ist. Der Arbeitsanschluss des Bremssteuerventils 56 ist im unbestromten Zustand mit dem Druckmittelausgang und im maximal bestromten Zustand ungedrosselt mit dem Druckmitteleingang verbunden.

Wie vor allem auch aus dem in Fig. 4 vergrößert abgebildeten Ausschnitt aus Fig. 3 hervorgeht, ist das Bremssteuerventil 56' gemäß der zweiten Ausführungsform der Sekundärbremsanlage 46' druckgesteuert ausgebildet. Der Arbeitsanschluss dieses druckgesteuerten Bremssteuerventils 56' ist bei drucklosem Steuereingang mit dem Druckmittelausgang und bei mit maximalem Stelldruck beaufschlagten Steuereingang ungedrosselt mit dem Druckmitteleingang verbunden. Dem druckgesteuerten Bremssteuerventil 56' ist ein als Proportionalventil ausgebildetes Vorsteuerventil 86 zugeordnet, über welches der Steuereingang des druckgesteuerten Bremssteuerventils 56' abgestuft mit der Druckmittelquelle 14 oder einem drucklosen hydraulischen Sammelbehälter 16c verbindbar ist.

Das dem druckgesteuerten Bremssteuerventil 56' zugeordnete Vorsteuerventil 86 ist als ein 3/3-Wege-Magnetventil mit einem Druckmitteleingang, einem Druckmittelausgang und einem Steuerausgang ausgebildet. Der Druckmitteleingang ist über eine Anschlussleitung 70 mit der Vorratsleitung 52, der Druckmittelausgang mit dem Sammelbehälter 16c und der Steuerausgang über eine Steuerleitung 88 mit dem Steuereingang des druckgesteuerten Bremssteuerventils 56' verbunden. Der Steuerausgang dieses Vorsteuerventils 86 ist im unbestromten Zustand mit dem Druckmittelausgang sowie im maximal bestromten Zustand ungedrosselt mit dem Druckmitteleingang verbunden. Der Elektromagnet des Vorsteuerventils 86 ist über eine elektrische Steuerleitung 90 mittels der Bremssteuereinheit 48 steuerbar.

Das steuerbare Rückschlagventil 62 ist druckgesteuert ausgebildet und durch eine Druckbeaufschlagung seines Steuereingangs entsperrbar. Über das dem Rückschlagventil 62 zugeordnete Vorsteuerventil 72 ist der Steuereingang des Rückschlagventils 62 wechselweise mit der Druckmittelquelle 14 oder einem drucklosen hydraulischen Sammelbehälter 16c verbindbar. Das Vorsteuerventil 72 ist als ein 3/2-Wege-Magnetschaltventil mit einem Druckmitteleingang, einem Druckmittelausgang und einem Steuerausgang ausgebildet. Der Druckmitteleingang ist über eine Anschlussleitung 70 mit der Vorratsleitung 52, der Druckmittelausgang ist mit dem Sammelbehälter 16c und der Steuerausgang des Vorsteuerventils 72 ist mit dem Steuereingang des Rückschlagventils 62 verbunden. Der Steuerausgang des Vorsteuerventils 72 ist im unbestromten Zustand mit dem Druckmittelausgang und im bestromten Zustand mit dem Druckmitteleingang des Vorsteuerventils 72 verbunden. Der Elektromagnet des Vorsteuerventils 72 ist über eine elektrische Steuerleitung 74 von der Bremssteuereinheit 48 ansteuerbar.

Über das steuerbare Rückschlagventil 62 ist die eingangsseitige Arbeitsleitung 60 mit der ausgangsseitigen Arbeitsleitung 66 verbunden. An die ausgangsseitige Arbeitsleitung 66 ist über eine Druckleitung 84 eine Handpumpe 82 angeschlossen, mittels der Hydrauliköl manuell aus einem drucklosen hydraulischen Sammelbehälter 16d in die Federspeicherbremszylinder 68a, 68b förderbar ist. Die Handpumpe 82 verfügt über ein nicht dargestelltes Rückschlagventil, sodass ein unbeabsichtigtes Entlüften über die Handpumpe ausgeschlossen ist. Mittels der Handpumpe 82 kann die über die drucklosen Federspeicherbremszylinder 68a, 68b eingelegte Feststellbremse gelöst werden, zum Beispiel um das Fahrzeug 2 abschleppen zu können, wenn dies aufgrund eines Defektes auf andere Weise nicht möglich ist.

Bei den in den Figuren 1 und 3 jeweils separat abgebildeten hydraulischen Sammelbehältern 16, 16a, 16b, 16c, 16d kann es sich um einen einzigen Sammelbehälter handeln, in den jeweils eine Saug- oder Rückflussleitung geführt ist.

Zur Erfassung und Überwachung des in den Federspeicherbremszylindern 68a, 68b anliegenden Arbeitsdruckes ist an die ausgangsseitige Arbeitsleitung 66 ein elektrohydraulischer Drucksensor 76 angeschlossen, der über eine elektrische Sensorleitung 78 mit der Bremssteuereinheit 48 verbunden ist.

In der ersten Ausführungsform der Sekundärbremsanlage 46 gemäß den Figuren 1 und 2 sind das Bremssteuerventil 56, das steuerbare Rückschlagventil 62 mit dem zugeordneten Vorsteuerventil 72 und der Drucksensor 76 in einem Bremssteuermodul 80 baulich zusammengefasst. In ähnlicher Weise sind in der zweiten Ausführungsform der Sekundärbremsanlage 46' gemäß den Figuren 2 und 4 das Bremssteuerventil 56' mit dem zugeordneten Vorsteuerventil 86, das steuerbare Rückschlagventil 62 mit dem zugeordneten Vorsteuerventil 72 und der Drucksensor 76 in einem Bremssteuermodul 80' baulich zusammengefasst. Durch die Zusammenfassung dieser Ventile 56, 62, 72; 56', 86, 62, 72 und des Drucksensors 76 in einem Bremssteuermodul 80, 80' wird deren Montage im Fahrzeug 2 vereinfacht und Anschlussfehler vermieden.

Bei beiden Ausführungsformen der Sekundärbremsanlage 46, 46 kann der in den Radbremszylindern 68a, 68b wirksame Arbeitsdruck p_{FSB} durch eine entsprechende direkte oder indirekte Ansteuerung des jeweiligen Bremssteuerventils 56, 56' von der elektronischen Bremssteuereinheit 48 kontinuierlich zwischen dem Umgebungsdruck und dem durch den in der Vorratsleitung 52 anstehenden Vorratsdruck pv gebildeten maximalen Arbeitsdruck p_{FSB_max} eingestellt werden. Dabei bleibt das steuerbare Rückschlagventil 62 bei einer Erhöhung des Arbeitsdruckes p_{FSB} unbetätigt, muss bei einer Absenkung des Arbeitsdruckes p_{FSB} aber durch eine Umschaltung des zugeordneten Vorsteuerventils 72 entsperrt werden.

Die Ausbildung des Bremssteuerventils 56 als ein Magnetventil in der ersten Ausführungsform der Sekundärbremsanlage 46 gemäß den Figuren 1 und 2 hat aufgrund der direkten Ansteuerung von der Bremssteuereinheit 48 den Vorteil einer hohen Steuerungsdynamik, sie erfordert aufgrund der großen Öffnungsquerschnitte zur Bewältigung der hohen Volumenströme des Druckmittels aber einen vergleichsweise großen Elektromagneten und entsprechend hohe Steuerströme.

Die Ausbildung des Bremssteuerventils 56' als ein druckgesteuertes Proportionalventil in der zweiten Ausführungsform der Sekundärbremsanlage 46' gemäß den Figuren 2 und 4 hat aufgrund der indirekten Ansteuerung über das Vorsteuerventil 86 den Vorteil niedrigerer Steuerströme, sie weist dadurch aber eine geringer Steuerdynamik und einen höheren apparativen Aufwand durch das zusätzliche Vorsteuerventil 86 auf.

Bei beiden Ausführungsformen der Sekundärbremsanlage 46, 46' ist bei einem Ausfall der elektrischen Energieversorgung der elektronischen Bremssteuereinheit 48 oder beim Auftreten einer elektronischen Störung gewährleistet, dass der Arbeitsanschluss des Bremssteuerventils 56, 56'dann drucklos und bei nicht entsperrtem Rückschlagventil 62 von den Federspeicherbremszylindern 68a, 68b an der Hinterachse 8 getrennt ist. Der wirksame Arbeitsdruck p_{FSB} ist dann in den Federspeicherbremszylindern 68a, 68b eingeschlossen, sodass der aktuelle Betriebszustand der Sekundärbremsanlage 46, 46' beibehalten wird. Die Sekundärbremsanlage 46, 46' ist somit uneingeschränkt sowohl als Feststellbremsanlage als auch als Hilfsbremsanlage nutzbar.

Ein weiterer Vorteil der Sekundärbremsanlage 46, 46' ergibt sich daraus, dass der Arbeitsdruck p_{FSB} in den Federspeicherbremszylindern 68a, 68b in Abhängigkeit eines ermitteltes Bremswertsignals S_{BW} bei Ansteuerung des Bremssteuerventils 56, 56' und des diesem nachgeschalteten steuerbaren Rückschlagventils 62 anhand von Kennlinien eingestellt werden kann, welche jeweils für unterschiedliche Betriebsarten der Sekundärbremsanlage 68a, 68b gelten. Diese Kennlinien sind an das jeweilige Fahrzeug 2 sowie die verwendeten Bauteile der Sekundärbremsanlage 46, 46' angepasst und in einem der Bremssteuereinheit 48 zugeordneten oder dort angeordneten Datenspeicher 49 abgespeichert.

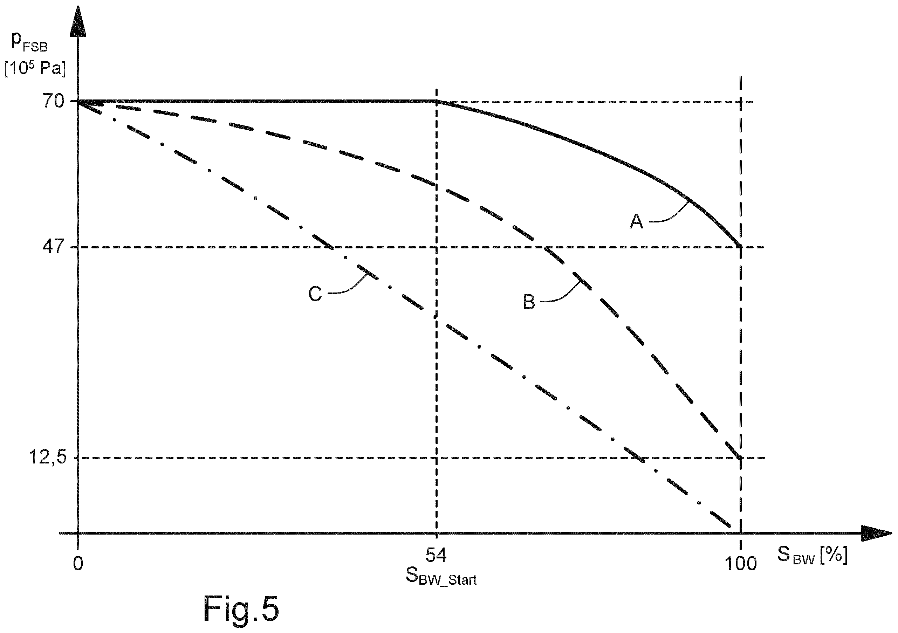

In dem in Fig. 5 abgebildeten Diagramm sind beispielhaft drei Kennlinien A, B, C eingezeichnet, welche den in die Federspeicherbremszylinder 68a, 68b einzusteuernden Arbeitsdruck p_{FSB} in Abhängigkeit von dem aktuellen Wert des Bremswertsignals S_{BW} für unterschiedliche Betriebsarten der Sekundärbremsanlage 46, 46' darstellen. Die Kurvenverläufe der drei Kennlinien A, B, C können im Detail auch anders als dargestellt sein, jedoch kennzeichnen sie immer einen Abfall des Arbeitsdrucks p_{FSB} der Sekundärbremsanlage 46, 46' in Abhängigkeit vom Bremswertsignal S_{BW}.

Das Bremswertsignal S_{BW} kann zum Beispiel mittels des Stellwegsignals des am Fußbremsventil 36 angeordneten Wegsensors 38 bestimmt worden sein. Der aktuelle Wert des Bremswertsignals S_{BW} gibt die aktuelle Bremsanforderung beziehungsweise den Fahrzeugverzögerungswunsch des Fahrers an, wobei ein Wert von S_{BW} = 0% eine nicht vorhandene Bremsanforderung und ein Wert von S_{BW} = 100% eine maximale Bremsanforderung des Fahrers bedeutet.

Die erste Kennlinie A gilt für eine Zusatzbremsfunktion der Sekundärbremsanlage 46, 46', bei welcher die Betriebsbremsanlage 30 bei höheren Werten des Bremswertsignals (hier beispielsweise ab dem Startwert S_{BW_Start} ≥ 54%) von der Sekundärbremsanlage 46, 46' abbremsend unterstützt wird. Entsprechend dieser ersten Kennlinie A ist demnach vorgesehen, dass ausgehend von einem maximalen Arbeitsdruck von vorliegend p_{FSB_max} = 70 × 10⁵ Pa bei einem Wert des Bremswertsignals von S_{BW} = 0% der Arbeitsdruck p_{FSB} ab dem zuvor festgelegten Startwert von S_{BW_Start} = 54% mit ansteigendem Wert des Bremswertsignals S_{BW} progressiv bis zu einen Arbeitsdruck von hier p_{FSB} = 47 × 10⁵ Pa bei einem Wert von 100% des Bremswertsignal S_{BW} abgesenkt wird. Durch den progressiven Verlauf der Druckabsenkung und der damit verbundenen progressiven Zunahme der Bremskraft der Federspeicherbremszylinder 68a, 68b wird die Änderung der Bremswirkung dem üblichen Verhalten einer druckgesteuerten Primärbremsanlage angepasst.

Die zweite Kennlinie B gilt für eine Hilfsbremsfunktion der Sekundärbremsanlage 46, 46', bei welcher die Bremswirkung der Betriebsbremsanlage 30 von der Bremswirkung der Sekundärbremsanlage 46, 46' ersetzt wird. Entsprechend dieser zweiten Kennlinie B ist vorgesehen, dass der Arbeitsdruck p_{FSB} ausgehend von einem maximalen Arbeitsdruck von vorliegend p_{FSB_max} = 70 × 10⁵ Pa bei einem Wert des Bremswertsignals S_{BW} = 0% mit ansteigendem Wert des Bremswertsignals S_{BW} progressiv bis auf einen minimalen Arbeitsdruck p_{FSB}, von p_{FSB} = 12,5 × 10⁵ Pa bei einem Bremswertsignal von S_{BW} = 100% abgesenkt wird. Auch hierbei wird durch den progressiven Verlauf der Druckabsenkung sowie der damit verbundenen progressiven Zunahme der Bremskraft der Federspeicherbremszylinder 68a, 68b die Änderung der Bremswirkung dem üblichen Verhalten einer druckgesteuerten Primärbremsanlage angepasst.

Die dritte Kennlinie C gilt für eine Notbremsfunktion der Sekundärbremsanlage 46, 46', bei welcher die Betriebsbremsanlage 30 durch die Sekundärbremsanlage 46, 46' hinsichtlich deren Bremsfunktion vollständig ersetzt wird. Entsprechend dieser dritten Kennlinie C ist vorgesehen, dass ausgehend von einem maximalen Arbeitsdruck von vorliegend p_{FSB_max} = 70 × 10⁵ Pa bei einem Wert des Bremswertsignal von S_{BW} = 0% der Arbeitsdruck p_{FSB} mit ansteigendem Wert des Bremswertsignals zumindest weitgehend linear bis auf einen Arbeitsdruck von p_{FSB} = 0 Pa bei einem Wert des Bremswertsignals von S_{BW} = 100% abgesenkt wird. Durch den linearen Verlauf der Druckabsenkung und der damit verbundenen linearen Zunahme der Bremskraft der Federspeicherbremszylinder 68a, 68b wird eine schnellstmögliche Steigerung der Bremswirkung erreicht.

### Bezugszeichenliste

- 2: Fahrzeug
- 4: Vorderachse
- 6a, 6b: Vorderräder
- 8: Hinterachse
- 10a,10b: Hinterräder
- 12: Elektronische Steuereinheit
- 14: Druckmittelquelle
- 16: Druckmittelsenke, Sammelbehälter
- 16a, 16b: Druckmittelsenke, Sammelbehälter
- 16c, 16d: Druckmittelsenke, Sammelbehälter
- 18: Ölpumpe
- 20: Druckmittelaufbereitungseinrichtung
- 22: Erster Drucksensor
- 24: Erste Sensorleitung
- 26: Zweiter Drucksensor
- 28: Zweite Sensorleitung
- 30: Primärbremsanlage, Betriebsbremsanlage
- 32: Vorratsleitung
- 34: Druckspeicher
- 36: Fußbremsventil
- 38: Wegsensor
- 40: Dritte Sensorleitung
- 42: Bremsleitung
- 42a, 42b: Leitungszweige
- 44a, 44b: Betriebsbremszylinder
- 46, 46': Sekundärbremsanlage
- 48: Bremssteuereinheit
- 49: Datenspeicher der Bremssteuereinheit
- 50: Datenbus, CAN-Bus
- 52: Vorratsleitung
- 54: Druckspeicher
- 56, 56': Bremssteuerventil
- 58: Steuerleitung
- 60: Arbeitsleitung
- 62: Steuerbares Rückschlagventil
- 66: Arbeitsleitung
- 66a, 66b: Leitungszweige
- 68a, 68b: Federspeicherbremszylinder
- 70: Anschlussleitung
- 72: Vorsteuerventil
- 74: Steuerleitung
- 76: Dritter Drucksensor
- 78: Sensorleitung
- 80, 80': Drucksteuermodul
- 82: Handpumpe
- 84: Druckleitung
- 86: Vorsteuerventil
- 88: Steuerleitung
- 90: Steuerleitung
- A: Erste Kennlinie
- B: Zweite Kennlinie
- C: Dritte Kennlinie
- p_{FSB}: Arbeitsdruck
- p_{FSB_max}: Maximaler Arbeitsdruck
- pv: Vorratsdruck
- S_{BW}: Bremswertsignal
- S_{BW_Start}: Startwert des Bremswertsignals

## Patentansprüche

1. Elektronisch steuerbare druckmittelbetriebene Sekundärbremsanlage (46, 46') eines Fahrzeugs (2), beispielsweise eines Nutzfahrzeugs, die sowohl als Feststellbremsanlage als auch als Hilfsbremsanlage nutzbar ist, mit Federspeicherbremszylindern (68a, 68b), welche an Radbremsen mindestens einer Fahrzeugachse (8) angeordnet sind, mit einem direkt oder indirekt elektronisch steuerbaren Bremssteuerventil (56, 56'), mittels dem die Bremskraft der Federspeicherbremszylinder (68a, 68b) durch eine Zufuhr von Druckmittel reduzierbar und durch eine Abfuhr von Druckmittel vergrößerbar ist, sowie mit einer elektronischen Bremssteuereinheit (48) zur Steuerung des Bremssteuerventils (56, 56') in Abhängigkeit von dem aktuellen Wert eines Bremswertsignals (S_{BW}), wobei das Bremssteuerventil (56, 56') als ein 3/3-Wege-Proportionalventil mit einem Druckmitteleingang, einem Druckmittelausgang und einem Arbeitsanschluss ausgebildet ist, wobei der Arbeitsanschluss kontinuierlich zwischen einer Verbindung mit dem Druckmittelausgang und dem Druckmitteleingang verstellbar ist, dass der Druckmitteleingang über eine Vorratsleitung (52) mit einer Druckmittelquelle (14), der Druckmittelausgang mit einer Druckmittelsenke (16b) und der Arbeitsanschluss über eine Arbeitsleitung (60, 66) mit den Federspeicherbremszylindern (68a, 68b) verbunden ist, und dass in der Arbeitsleitung (60) ein steuerbares, in Richtung zu dem Bremssteuerventil (56, 56') sperrendes Rückschlagventil (62) angeordnet ist, **dadurch gekennzeichnet, dass** das Bremssteuerventil (56) als ein Magnetventil ausgebildet ist, dessen Elektromagnet über eine elektrische Steuerleitung (58) unmittelbar von der Bremssteuereinheit (48) ansteuerbar ist, und dass der Arbeitsanschluss dieses Bremssteuerventils (56) im unbestromten Zustand mit dem Druckmittelausgang verbunden ist sowie im maximal bestromten Zustand ungedrosselt mit dem Druckmitteleingang verbunden ist.

2. Sekundärbremsanlage (46, 46') nach Anspruch 1, **dadurch gekennzeichnet, dass** das steuerbare Rückschlagventil (62) druckgesteuert ausgebildet sowie durch eine Druckbeaufschlagung seines Steuereingangs entsperrbar ist, und dass dem steuerbaren Rückschlagventil (62) ein Vorsteuerventil (72) zugeordnet ist, mittels dem der Steuereingang des Rückschlagventils (62) wechselweise mit einer Druckmittelquelle (14) oder mit einer Druckmittelsenke (16c) verbindbar ist.

3. Sekundärbremsanlage (46, 46') nach Anspruch 2, **dadurch gekennzeichnet, dass** das dem steuerbaren Rückschlagventil (62) zugeordnete Vorsteuerventil (72) als ein 3/2-Wege-Magnetschaltventil mit einem Druckmitteleingang, einem Druckmittelausgang und einem Steuerausgang ausgebildet ist, dass der Druckmitteleingang dieses Vorsteuerventils (72) über eine Anschlussleitung (70) mit der Vorratsleitung (52), der Druckmittelausgang mit der Druckmittelsenke (16c) und der Steuerausgang mit dem Steuereingang des steuerbaren Rückschlagventils (62) verbunden ist, dass der Steuerausgang dieses Vorsteuerventils (72) im unbestromten Zustand mit dem Druckmittelausgang sowie im bestromten Zustand mit dem Druckmitteleingang verbunden ist, und dass der Elektromagnet dieses Vorsteuerventils (72) über eine elektrische Steuerleitung (74) von der Bremssteuereinheit (48) ansteuerbar ist.

4. Sekundärbremsanlage (46, 46') nach Anspruch 1, **dadurch gekennzeichnet, dass** ein Drucksensor (76) an die Arbeitsleitung (66) angeschlossen und über eine elektrische Sensorleitung (78) mit der Bremssteuereinheit (48) verbunden ist.

5. Sekundärbremsanlage (46, 46') nach einem der Ansprüche 1 bis 4, **dadurch gekennzeichnet, dass** zumindest das Bremssteuerventil (56, 56'), das Rückschlagventil (62) und das Vorsteuerventil (72, 86) in einem Bremssteuermodul (80, 80') baulich zusammengefasst sind.

6. Sekundärbremsanlage (46, 46') nach einem der Ansprüche 1 bis 5, **dadurch gekennzeichnet, dass** die Bremssteuereinheit (48) einen Datenspeicher (49) aufweist, in dem für unterschiedliche Betriebsarten gültige Kennlinien (A, B, C) zur Einstellung des Arbeitsdruckes (p_{FSB}) in den Federspeicherbremszylindern (68a, 68b) in Abhängigkeit von einem Bremswertsignal (S_{BW}) abgespeichert sind.

7. Sekundärbremsanlage (46, 46') nach einem der Ansprüche 1 bis 6, **dadurch gekennzeichnet, dass** die Sekundärbremsanlage (46, 46') als eine hydraulische Bremsanlage ausgebildet ist, dass die Druckmittelquelle (14) eine Ölpumpe (18), eine hydraulische Druckaufbereitungseinrichtung (20) sowie einen hydraulischen Druckspeicher (54) aufweist, und dass die Druckmittelsenke (16, 16a, 16b, 16c, 16d) als mindestens ein hydraulischer Sammelbehälter ausgebildet ist.

8. Sekundärbremsanlage (46, 46') nach einem der Ansprüche 1 bis 6, **dadurch gekennzeichnet, dass** die Sekundärbremsanlage (46, 46') als eine Druckluftbremsanlage ausgebildet ist, dass die Druckmittelquelle einen Kompressor, eine pneumatische Druckaufbereitungseinrichtung sowie einen pneumatischen Druckspeicher aufweist, und dass die Druckmittelsenke durch mindestens einen Entlüftungsausgang gebildet ist.

9. Verfahren zur Steuerung einer elektronisch steuerbaren, druckmittelbetriebenen Sekundärbremsanlage (46, 46') eines Fahrzeugs (2) nach einem der vorherigen Ansprüche, welche sowohl als Feststellbremsanlage als auch als Hilfsbremsanlage nutzbar ist, wobei die Sekundärbremsanlage (46, 46') folgendes aufweist: - Federspeicherbremszylinder (68a, 68b), welche an Radbremsen mindestens einer Fahrzeugachse (8) angeordnet sind,
- ein direkt oder indirekt elektronisch steuerbares Bremssteuerventil (56, 56'), mittels dem die Bremskraft der Federspeicherbremszylinder (68a, 68b) durch eine Zufuhr von Druckmittel reduzierbar und durch eine Abfuhr von Druckmittel vergrößerbar ist,
- sowie eine elektronische Bremssteuereinheit (48) mit einem Datenspeicher (49), welche das Bremssteuerventil (56, 56') in Abhängigkeit von dem aktuellen Wert eines Bremswertsignals (S_{BW}) steuert,
**dadurch gekennzeichnet, dass** der Arbeitsdruck (p_{FSB}) in den Federspeicherbremszylindern (68a, 68b) in Abhängigkeit von dem aktuellen Wert des Bremswertsignals (S_{BW}) unter Ansteuerung des Bremssteuerventils (56, 56') sowie eines diesem nachgeschalteten, steuerbaren, in Richtung des Bremssteuerventils (56, 56') sperrenden Rückschlagventils (62) eingestellt wird.

10. Verfahren nach Anspruch 9, **dadurch gekennzeichnet, dass** der Arbeitsdruck (p_{FSB}) unter Nutzung von für unterschiedliche Betriebsarten der Sekundärbremsanlage (46, 46') gültige Kennlinien (A, B, C) erfolgt, welche in dem Datenspeicher (49) der Bremssteuereinheit (48) abgespeichert sind.

11. Verfahren nach Anspruch 9 oder 10, **dadurch gekennzeichnet, dass** die Sekundärbremsanlage (46, 46') in einer Zusatzbremsfunktion genutzt wird, bei welcher die Sekundärbremsanlage (46, 46') die Betriebsbremsanlage (30) dann das Fahrzeug (2) abbremsend unterstützt, wenn Werte eines Bremswertsignals (S_{BW}) vorliegen, welche einen Bremsbedarf signalisieren, der größer ist als diejenige Bremsverzögerung des Fahrzeugs, welche von der Betriebsbremsanlage (30) alleine bewältigbar wäre, wobei der Arbeitsdruck (p_{FSB}) in den Federspeicherbremszylindern (68a, 68b) ausgehend von einem maximalen Arbeitsdruck (p_{FSB_max}) bei einem minimalen Wert des Bremswertsignals (S_{BW}) ab einem festgelegten Startwert (S_{BW_Start}) des Bremswertsignals (S_{BW}) und weiter ansteigenden Werten des Bremswertsignals (S_{BW}) bis auf einen vorbestimmten Arbeitsdruck (p_{FSB}) bei einem maximalen Wert des Bremswertsignals (S_{BW}) abgesenkt wird.

12. Verfahren nach Anspruch 9 oder 10, **dadurch gekennzeichnet, dass** die Sekundärbremsanlage (46, 46') in einer Hilfsbremsfunktion genutzt wird, bei welcher die Bremstätigkeit der Betriebsbremsanlage (30) durch die Bremstätigkeit der Sekundärbremsanlage (46, 46') ersetzt wird, dass dazu der Arbeitsdruck (p_{FSB}) der Sekundärbremsanlage (46, 46') ausgehend von einem maximalen Arbeitsdruck (p_{FSB_max}) bei einem minimalen Wert des Bremswertsignals (S_{BW}) mit ansteigendem Wert des Bremswertsignals (S_{BW}) bis auf einen minimalen Arbeitsdruck (p_{FSB}) bei einem maximalen Wert des Bremswertsignals (S_{BW}) abgesenkt wird.

13. Verfahren nach einem der Ansprüche 9 bis 12, **dadurch gekennzeichnet, dass** der Arbeitsdruck (p_{FSB}) der Sekundärbremsanlage (46, 46') ausgehend von einem maximalen Arbeitsdruck (p_{FSB_max}) bei einem minimalen Wert des Bremswertsignals (S_{BW}) mit ansteigendem Wert des Bremswertsignals (S_{BW}) progressiv bis auf einen minimalen Arbeitsdruck (p_{FSB}) bei einem maximalen Wert des Bremswertsignals (S_{BW}) abgesenkt wird.

14. Verfahren nach Anspruch 9 oder 10, **dadurch gekennzeichnet, dass** die Sekundärbremsanlage (46, 46') in einer Notbremsfunktion genutzt wird, bei welcher die Betriebsbremsanlage (30) durch die Sekundärbremsanlage (46, 46') hinsichtlich deren Bremsfunktion vollständig ersetzt wird, dass dazu der Arbeitsdruck (p_{FSB}) der Sekundärbremsanlage (46, 46') ausgehend von einem maximalen Arbeitsdruck (p_{FSB_max}) bei einem minimalen Wert des Bremswertsignals (S_{BW}) mit ansteigendem Wert des Bremswertsignals (S_{BW}) bis zu einen geringstmöglichen Arbeitsdruck (p_{FSB}) bei einem maximalen Wert des Bremswertsignals (S_{BW}) abgesenkt wird.

15. Verfahren nach Anspruch 14, **dadurch gekennzeichnet, dass** der Arbeitsdruck (p_{FSB}) der Sekundärbremsanlage (46, 46') ausgehend von einem maximalen Arbeitsdruck (p_{FSB_max}) bei einem minimalen Wert des Bremswertsignals (S_{BW}) mit ansteigendem Wert des Bremswertsignals (S_{BW}) linear bis auf einen minimalen Arbeitsdruck (p_{FSB}) bei einem maximalen Wert des Bremswertsignals (S_{BW}) abgesenkt wird.

16. Verfahren nach einem der Ansprüche 9 bis 15, **dadurch gekennzeichnet, dass** der Arbeitsdruck (p_{FSB}) der Sekundärbremsanlage (46, 46') ausgehend von einem maximalen Arbeitsdruck (p_{FSB_max}) bei einem minimalen Wert des Bremswertsignals (S_{BW}) mit ansteigendem Wert des Bremswertsignals (S_{BW}) bis auf einen minimalen Arbeitsdruck (p_{FSB}) bei einem maximalen Wert des Bremswertsignals (S_{BW}) abgesenkt wird, wobei der Verlauf dieser Arbeitsdruckabsenkung in Abhängigkeit von demjenigen Fahrzeugtyp, Fahrzeugmodell und/oder Fahrzeuggesamtgewicht zumindest mitbestimmt ist, in welchem das Verfahren genutzt wird.

## Claims

1. Electronically controllable, pressure medium-operated secondary brake system (46, 46') of a vehicle (2), for example of a utility vehicle, which can be used both as a parking brake system and as an auxiliary brake system, with spring brake cylinders (68a, 68b) which are arranged on wheel brakes of at least one vehicle axle (8), with a directly or indirectly electronically controllable brake control valve (56, 56'), by means of which the brake force of the spring brake cylinders (68a, 68b) can be reduced by way of a feed of pressure medium and can be increased by way of a discharge of pressure medium, and with an electronic brake control unit (48) for controlling the brake control valve (56, 56') in a manner which is dependent on the actual value of a brake value signal (S_{BW}), the brake control valve (56, 56') being configured as a 3/3-way proportional valve with a pressure medium inlet, a pressure medium outlet and a working connector, it being possible for the working connector to be adjusted continuously between a connection to the pressure medium outlet and the pressure medium inlet, the pressure medium inlet being connected via a supply line (52) to a pressure medium source (14), the pressure medium outlet being connected to a pressure medium sink (16b), and the working connector being connected via a working line (60, 66) to the spring brake cylinders (68a, 68b), and a controllable check valve (62) which shuts in the direction of the brake control valve (56, 56') being arranged in the working line (60), **characterized in that** the brake control valve (56) is configured as a solenoid valve, the electromagnet of which can be actuated via an electric control line (58) directly by the brake control unit (48), and **in that** the working connector of this brake control valve (56) is connected to the pressure medium outlet in the non-energized state and is connected to the pressure medium inlet in an unthrottled manner in the maximum energized state.

2. Secondary brake system (46, 46') according to Claim 1, **characterized in that** the controllable check valve (62) is of pressure medium-controlled configuration and can be unlocked by way of pressurization of its control inlet, and **in that** the controllable check valve (62) is assigned a pilot control valve (72), by means of which the control inlet of the check valve (62) can be connected selectively to a pressure medium source (14) or to a pressure medium sink (16c).

3. Secondary brake system (46, 46') according to Claim 2, **characterized in that** the pilot control valve (72) which is assigned to the controllable check valve (62) is configured as a 3/2-way solenoid switching valve with a pressure medium inlet, a pressure medium outlet and a control outlet, **in that** the pressure medium inlet of this pilot control valve (72) is connected via a connector line (70) to the supply line (52), the pressure medium outlet is connected to the pressure medium sink (16c), and the control outlet is connected to the control inlet of the controllable check valve (62), **in that** the control outlet of this pilot control valve (72) is connected to the pressure medium outlet in the non-energized state and is connected to the pressure medium inlet in the energized state, and **in that** the electromagnet of this pilot control valve (72) can be actuated via an electric control line (74) by the brake control unit (48).

4. Secondary brake system (46, 46') according to Claim 1, **characterized in that** a pressure sensor (76) is connected to the working line (66) and is connected via an electric sensor line (78) to the brake control unit (48) .

5. Secondary brake system (46, 46') according to one of Claims 1 to 4, **characterized in that** at least the brake control valve (56, 56'), the check valve (62) and the pilot control valve (72, 86) are combined structurally in a brake control module (80, 80').

6. Secondary brake system (46, 46') according to one of Claims 1 to 5, **characterized in that** the brake control unit (48) has a data memory (49), in which characteristic curves (A, B, C) which are valid for different operating types are stored in order to set the working pressure (p_{FSB}) in the spring brake cylinders (68a, 68b) in a manner which is dependent on a brake value signal (S_{BW}).

7. Secondary brake system (46, 46') according to one of Claims 1 to 6, **characterized in that** the secondary brake system (46, 46') is configured as a hydraulic brake system, **in that** the pressure medium source (14) has an oil pump (18), a hydraulic pressure preparation device (20) and a hydraulic pressure accumulator (54), and **in that** the pressure medium sink (16, 16a, 16b, 16c, 16d) is configured as at least one hydraulic collecting vessel.

8. Secondary brake system (46, 46') according to one of Claims 1 to 6, **characterized in that** the secondary brake system (46, 46') is configured as a compressed air brake system, **in that** the pressure medium source has a compressor, a pneumatic pressure preparation device and a pneumatic pressure accumulator, and **in that** the pressure medium sink is formed by way of at least one venting outlet.

9. Method for controlling an electronically controllable, pressure medium-operated secondary brake system (46, 46') of the vehicle (2) according to one of the preceding claims, which can be used both as a parking brake system and as an auxiliary brake system, the secondary brake system (46, 46') having the following:
- spring brake cylinders (68a, 68b) which are arranged on wheel brakes of at least one vehicle axle (8),
- a directly or indirectly electronically controllable brake control valve (56, 56'), by means of which the brake force of the spring brake cylinders (68a, 68b) can be reduced by way of a feed of pressure medium and can be increased by way of a discharge of pressure medium,
- and an electronic brake control unit (48) with a data memory (49) which controls the brake control valve (56, 56') in a manner which is dependent on the actual value of a brake value signal (S_{BW}),
**characterized in that** the working pressure (p_{FSB}) in the spring brake cylinders (68a, 68b) is set in a manner which is dependent on the actual value of the brake value signal (S_{BW}) with actuation of the brake control valve (56, 56') and a controllable check valve (62) which is connected downstream of the former and shuts in the direction of the brake control valve (56, 56').

10. Method according to Claim 9, **characterized in that** the working pressure (p_{FSB}) takes place with utilization of characteristic curves (A, B, C) which are valid for different operating types of the secondary brake system (46, 46') and is stored in the data memory (49) of the brake control unit (48).

11. Method according to Claim 9 or 10, **characterized in that** the secondary brake system (46, 46') is used in an additional brake function, in the case of which the secondary brake system (46, 46') assists the service brake system (30) in a manner which brakes the vehicle (2) when there are values of a brake value signal (S_{BW}) which signifies a brake requirement which is greater than that brake retardation of the vehicle which would be able to be handled by the service brake system (30) alone, the working pressure (p_{FSB}) in the spring brake cylinders (68a, 68b) being lowered, starting from a maximum working pressure (p_{FSB_max}) in the case of a minimum value of the brake value signal (S_{BW}), from a fixed start value (S_{BW_Start}) of the brake value signal (S_{BW}) and further rising values of the brake value signal (S_{BW}) as far as a predefined working pressure (p_{FSB}) in the case of a maximum value of the brake value signal (S_{BW}).

12. Method according to Claim 9 or 10, **characterized in that** the secondary brake system (46, 46') is used in an auxiliary brake function, in the case of which the brake activity of the service brake system (30) is replaced by the brake activity of the secondary brake system (46, 46'), **in that**, to this end, the working pressure (p_{FSB}) of the secondary brake system (46, 46') is lowered, starting from a maximum working pressure (p_{FSB_max}) in the case of a minimum value of the brake value signal (S_{BW}), with a rising value of the brake value signal (S_{BW}) as far as a minimum working pressure (p_{FSB}) in the case of a maximum pressure of the brake value signal (S_{BW}).

13. Method according to one of Claims 9 to 12, **characterized in that** the working pressure (p_{FSB}) of the secondary brake system (46, 46') is lowered, starting from a maximum working pressure (p_{FSB_max}) in the case of a minimum value of the brake value signal (S_{BW}), with a rising value of the brake value signal (S_{BW}) progressively as far as a minimum working pressure (p_{FSB}) in the case of a maximum value of the brake value signal (S_{BW}).

14. Method according to Claim 9 or 10, **characterized in that** the secondary brake system (46, 46') is used in an emergency brake function, in the case of which the service brake system (30) is replaced completely by the secondary brake system (46, 46') with regard to its brake function, **in that**, to this end, the working pressure (p_{FSB}) of the secondary brake system (46, 46') is lowered, starting from a maximum working pressure (p_{FSB_max}) in the case of a minimum value of the brake value signal (S_{BW}), with a rising value of the brake value signal (S_{BW}) as far as a working pressure (p_{FSB}) which is as low as possible in the case of a maximum value of the brake value signal (S_{BW}) .

15. Method according to Claim 14, **characterized in that** the working pressure (p_{FSB}) of the secondary brake system (46, 46') is lowered, starting from a maximum working pressure (p_{FSB_max}) in the case of a minimum value of the brake value signal (S_{BW}) , with a rising value of the brake value signal (S_{BW}) linearly as far as a minimum working pressure (p_{FSB}) in the case of a maximum value of the brake value signal (S_{BW}) .

16. Method according to one of Claims 9 to 15, **characterized in that** the working pressure (p_{FSB}) of the secondary brake system (46, 46') is lowered, starting from a maximum working pressure (p_{FSB_max}) in the case of a minimum value of the brake value signal (S_{BW}), with a rising value of the brake value signal (S_{BW}) as far as a minimum working pressure (p_{FSB}) in the case of a maximum value of the brake value signal (S_{BW}), the gradient of this working pressure reduction being at least co-determined in a manner which is dependent on that vehicle type, vehicle model and/or overall vehicle weight, in which the method is being used.

## Revendications

1. Système de freinage secondaire (45, 46') à commande électronique, actionné par un fluide sous pression, d'un véhicule (2), par exemple d'un véhicule utilitaire, qui peut être utilisé à la fois comme système de frein de stationnement et comme système de freinage auxiliaire, comprenant des cylindres de frein à accumulateur (68a, 68b) qui sont disposés sur des freins de roue d'au moins un essieu de véhicule (8), une vanne de commande de freinage (56, 56') à commande électronique directe ou indirecte au moyen de laquelle la force de freinage des cylindres de frein à accumulateur (68a, 68b) peut être réduite par un apport de fluide sous pression et peut être augmentée par une évacuation de fluide sous pression, ainsi qu'une unité de commande de frein électronique (48) pour commander la vanne de commande de freinage (56, 56') en fonction de la valeur actuelle d'un signal de valeur de freinage (S_{BW}), dans lequel la vanne de commande de freinage (56, 56') est réalisée comme une vanne proportionnelle 3/3 voies pourvue d'une entrée de fluide sous pression, d'une sortie de fluide sous pression et d'un raccord de travail, dans lequel le raccord de travail peut être réglé en continu entre une connexion à la sortie de fluide sous pression et à l'entrée de fluide sous pression, l'entrée de fluide sous pression étant connectée par l'intermédiaire d'une conduite de réserve (52) à une source de fluide sous tension (14), la sortie de fluide sous tension étant connectée à une cuvette à fluide sous pression (16b), et le raccord de travail étant connecté par une conduite de travail (60, 66) aux cylindres de frein à accumulateur (68a, 68b), et une vanne de retenue (62) pouvant être commandée, bloquant en direction de la vanne de commande de freinage (56, 56') étant disposée dans la conduite de travail (60),
**caractérisé en ce que** la vanne de commande de freinage (56) est réalisée sous forme de vanne magnétique dont l'électroaimant peut être excité directement par l'unité de commande de freinage (48) par l'intermédiaire d'une ligne de commande électrique (58), et **en ce que** le raccord de travail de cette vanne de commande de freinage (56) à l'état non alimenté est connecté à la sortie de fluide sous pression, et est connecté sans étranglement à l'état alimenté au maximum à l'entrée de fluide sous pression.

2. Système de freinage secondaire (46, 46') selon la revendication 1, **caractérisé en ce que** la vanne de retenue (62) pouvant être commandée est réalisée de manière commandée par pression, et peut être débloquée par une mise sous pression de son entrée de commande, et **en ce qu'**une vanne pilote (72) est associée à la vanne de retenue (62) pouvant être commandée, au moyen de laquelle l'entrée de commande de la vanne de retenue (62) peut être connectée en alternance à une source de fluide sous pression (14) ou à une cuvette à fluide sous pression (16c).

3. Système de freinage secondaire (46, 46') selon la revendication 2, **caractérisé en ce que** la vanne pilote (72) associée à la vanne de retenue (62) pouvant être commandée est réalisée sous forme de vanne de commande magnétique 3/2 voies avec une entrée de fluide sous pression, une sortie de fluide sous pression et une sortie de commande, **en ce que** l'entrée de fluide sous pression de cette vanne pilote (72) est connectée par une conduite de raccordement (70) à la conduite de réserve (52), la sortie de fluide sous pression est connectée à la cuvette à fluide sous pression (16c), et la sortie de commande est connectée à l'entrée de commande de la vanne de retenue (62) pouvant être commandée, **en ce que** la sortie de commande de cette vanne pilote (72) est connectée à l'état non alimenté à la sortie de fluide sous pression et est connectée à l'état alimenté à l'entrée de fluide sous pression, et **en ce que** l'électroaimant de cette vanne pilote (72) peut être excité par l'unité de commande de freinage (48) par l'intermédiaire d'une ligne de commande électrique (74).

4. Système de freinage secondaire (46, 46') selon la revendication 1, **caractérisé en ce qu'**un capteur de pression (76) est raccordé à la conduite de travail (66) et est connecté à l'unité de commande de freinage (48) par une ligne de capteur électrique (78).

5. Système de freinage secondaire (46, 46') selon l'une quelconque des revendications 1 à 4, **caractérisé en ce qu'**au moins la vanne de commande de freinage (56, 56'), la vanne de retenue (62) et la vanne pilote (72, 86) sont regroupées par construction en un module de commande de freinage (80, 80').

6. Système de freinage secondaire (46, 46') selon l'une quelconque des revendications 1 à 5, **caractérisé en ce que** l'unité de commande de freinage (48) présente une mémoire de données (49) dans laquelle des courbes caractéristiques (A, B, C) valables pour différents modes de fonctionnement sont mémorisées pour régler la pression de travail (p_{FSB}) dans les cylindres de frein à accumulateur (68a, 68b) en fonction d'un signal de valeur de freinage (Saw) .

7. Système de freinage secondaire (46, 46') selon l'une quelconque des revendications 1 à 6, **caractérisé en ce que** le système de freinage secondaire (46, 46') est réalisé sous forme de système de freinage hydraulique, **en ce que** la source de fluide sous pression (14) présente une pompe à huile (18), un moyen d'établissement de pression hydraulique (20) ainsi qu'un accumulateur de pression hydraulique (54), et **en ce que** la cuvette à fluide sous pression (16, 16a, 16b, 16c, 16d) est réalisée comme au moins un collecteur hydraulique.

8. Système de freinage secondaire (46, 46') selon l'une quelconque des revendications 1 à 6, **caractérisé en ce que** le système de freinage secondaire (46, 46') est réalisé sous forme de système de freinage à air comprimé, **en ce que** la source de fluide sous pression présente un compresseur, un moyen d'établissement de pression pneumatique ainsi d'un accumulateur de pression pneumatique, et **en ce que** la cuvette à fluide sous pression est formée par au moins une sortie de purge.

9. Procédé permettant de commander un système de freinage secondaire (45, 46') à commande électronique, actionné par un fluide sous pression, d'un véhicule (2) selon l'une quelconque des revendications précédentes, qui peut être utilisé à la fois comme système de frein de stationnement et comme système de freinage auxiliaire, dans lequel le système de freinage secondaire (46, 46') présente :
- des cylindres de frein à accumulateur (68a, 68b) qui sont disposés sur des freins de roue d'au moins un essieu de véhicule (8),
- une vanne de commande de freinage (56, 56') à commande électronique directe ou indirecte au moyen de laquelle la force de freinage des cylindres de frein à accumulateur (68a, 68b) peut être réduite par un apport de fluide sous pression et peut être augmentée par une évacuation de fluide sous pression,
- ainsi qu'une unité de commande de frein électronique (48) pourvue d'une mémoire de données (49) qui commande la vanne de commande de freinage (56, 56') en fonction de la valeur actuelle d'un signal de valeur de freinage (S_{BW}),
**caractérisé en ce que** la pression de travail (p_{FSB}) dans les cylindres de frein à accumulateur (68a, 68b) est réglée en fonction de la valeur actuelle du signal de valeur de freinage (S_{BW}) en pilotant la vanne de commande de freinage (56, 56') ainsi qu'une vanne de retenue (62) pouvant être commandée, bloquant en direction de la vanne de commande de freinage (56, 56'), et placée en aval de celle-ci.

10. Procédé selon la revendication 9, **caractérisé en ce que** la pression de travail (p_{FSB}) est effectuée en utilisant des courbes caractéristiques (A, B, C) valables pour différents modes de fonctionnement du système de freinage secondaire (46, 46') et qui sont mémorisées dans la mémoire de données (49) de l'unité de commande de freinage (48).

11. Procédé selon la revendication 9 ou 10, **caractérisé en ce que** le système de freinage secondaire (46, 46') est utilisé dans une fonction de freinage supplémentaire dans laquelle le système de freinage secondaire (46, 46') assiste alors le système de frein de service (30) en freinant le véhicule (2) quand des valeurs d'un signal de valeur de freinage (S_{BW}) sont présentes qui signalent une demande de freinage qui est supérieure à la décélération de freinage du véhicule que le système de frein de service (30) pourrait gérer tout seul, dans lequel la pression de travail (p_{FSB}) dans les cylindres de frein à accumulateur (68a, 68b) est abaissée en partant d'une pression de travail maximale (p_{FSB_max}) pour une valeur minimale du signal de valeur de freinage (S_{BW}) à partir d'une valeur initiale définie (S_{BW_Start}) du signal de valeur de freinage (S_{BW}) et pour des valeurs qui continuent d'augmenter du signal de valeur de freinage (S_{BW}) jusqu'à une pression de travail prédéterminée (p_{FSB}) pour une valeur maximale du signal de valeur de freinage (S_{BW}).

12. Procédé selon la revendication 9 ou 10, **caractérisé en ce que** le système de freinage secondaire (46, 46') est utilisé dans une fonction de freinage auxiliaire dans laquelle l'activité de freinage du système de frein de service (30) est remplacée par l'activité de freinage du système de freinage secondaire (46, 46'), **en ce qu'**à cet effet, la pression de travail (p_{FSB}) du système de freinage secondaire (46, 46') est abaissée en partant d'une pression de travail maximale (p_{FSB_max}) pour une valeur minimale du signal de valeur de freinage (S_{BW}) avec une valeur croissante du signal de valeur de freinage (S_{BW}) jusqu'à une pression de travail minimale (p_{FSB}) pour une valeur maximale du signal de valeur de freinage (S_{BW}).

13. Procédé selon l'une quelconque des revendications 9 à 12, **caractérisé en ce que** la pression de travail (p_{FSB}) du système de freinage secondaire (46, 46') est abaissée en partant d'une pression de travail maximale (p_{FSB_max}) pour une valeur minimale du signal de valeur de freinage (S_{BW}) avec une valeur croissante du signal de valeur de freinage (S_{BW}) progressivement jusqu'à une pression de travail minimale (p_{FSB}) pour une valeur maximale du signal de valeur de freinage (S_{BW}).

14. Procédé selon la revendication 9 ou 10, **caractérisé en ce que** le système de freinage secondaire (46, 46') est utilisé dans une fonction de freinage d'urgence dans laquelle le système de frein de service (30) est remplacé entièrement par le système de freinage secondaire (46, 46') concernant sa fonction de freinage,
**en ce qu'**à cet effet, la pression de travail (p_{FSB}) du système de freinage secondaire (46, 46') est abaissée en partant d'une pression de travail maximale (p_{FSB_max}) pour une valeur minimale du signal de valeur de freinage (S_{BW}) avec une valeur croissante du signal de valeur de freinage (S_{BW}) jusqu'à une pression de travail aussi faible que possible (p_{FSB}) pour une valeur maximale du signal de valeur de freinage (S_{BW}).

15. Procédé selon la revendication 14, **caractérisé en ce que** la pression de travail (p_{FSB}) du système de freinage secondaire (46, 46') est abaissée en partant d'une pression de travail maximale (p_{FSB_max}) pour une valeur minimale du signal de valeur de freinage (S_{BW}) avec une valeur croissante du signal de valeur de freinage (S_{BW}) de manière linéaire jusqu'à une pression de travail minimale (p_{FSB}) pour une valeur maximale du signal de valeur de freinage (S_{BW}).

16. Procédé selon l'une quelconque des revendications 9 à 15, **caractérisé en ce que** la pression de travail (p_{FSB}) du système de freinage secondaire (46, 46') est abaissée en partant d'une pression de travail maximale (p_{FSB_max}) pour une valeur minimale du signal de valeur de freinage (S_{BW}) avec une valeur croissante du signal de valeur de freinage (S_{BW}) jusqu'à une pression de travail minimale (p_{FSB}) pour une valeur maximale du signal de valeur de freinage (S_{BW}), dans lequel le déroulement de cet abaissement de pression de travail est au moins conjointement déterminé en fonction du type du véhicule, du modèle du véhicule et/ou du poids total du véhicule sur lequel le procédé est utilisé.
